(19) Europäisches Patentamt
European Patent Office
Office européen des brevets

(11) **EP 3 473 604 B1**

(12) **EUROPÄISCHE PATENTSCHRIFT**

(45) Veröffentlichungstag und Bekanntmachung des Hinweises auf die Patenterteilung:
**20.05.2020 Patentblatt 2020/21**

(51) Int Cl.:
***C03C 3/091*** *(2006.01)*   ***C03C 3/093*** *(2006.01)*
***C03C 4/20*** *(2006.01)*

(21) Anmeldenummer: **18212298.6**

(22) Anmeldetag: **08.02.2018**

(54) **GLÄSER MIT VERBESSERTER HYDROLYTISCHER UND LAUGENBESTÄNDIGKEIT**

GLASSES HAVING IMPROVED HYDROLYTIC AND LYE RESISTANCE

VERRES À RÉSISTANCE HYDROLYTIQUE ET À RÉSISTANCE AUX ALCALINS AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2017 DE 102017102485**

(43) Veröffentlichungstag der Anmeldung:
**24.04.2019 Patentblatt 2019/17**

(62) Dokumentnummer(n) der früheren Anmeldung(en) nach Art. 76 EPÜ:
**18155777.8 / 3 360 852**

(73) Patentinhaber: **Schott AG**
**55122 Mainz (DE)**

(72) Erfinder:
• **Fotheringham, Ulrich**
**65191 Wiesbaden (DE)**
• **Schwall, Michael**
**55116 Mainz (DE)**
• **Ritter, Simone Monika**
**55128 Mainz (DE)**
• **Naß, Peter**
**55120 Mainz (DE)**
• **Kass, Christof**
**95643 Tirschenreuth (DE)**
• **Berndhäuser, Christoph**
**55268 Nieder-Olm (DE)**
• **Groß, Christoph**
**55126 Mainz (DE)**

(74) Vertreter: **Fuchs Patentanwälte Partnerschaft mbB**
**Westhafenplatz 1**
**60327 Frankfurt am Main (DE)**

(56) Entgegenhaltungen:
EP-A1- 0 699 636     EP-A1- 1 314 704
WO-A1-2015/111524    WO-A1-2016/088778
DE-A1-102004 023 732  DE-A1-102014 101 756
DE-A1-102014 119 594  DE-C1- 19 515 608
FR-A1- 2 936 794     JP-A- 2005 037 651

**Beschreibung**

Die Erfindung betrifft Gläser und Glasprodukte, die gute Laugen- und hydrolytische Beständigkeit mit vorteilhaften thermischen Ausdehnungseigenschaften vereinen, wobei diese Ausdehnungseigenschaften im Glasinneren ("Bulk") und an der Oberfläche möglichst ähnlich oder gleich sein sollten. Erfindungsgemäß sind auch Herstellungsverfahren solcher Gläser und ihre Verwendungen.

Stand der Technik

Gläser mit guter hydrolytischer und Laugenbeständigkeit werden für viele Anwendungen benötigt, insbesondere für Anwendungen im Bereich "pharmaceutical packaging". Dabei wird im Allgemeinen noch ein bestimmter thermischer Ausdehnungskoeffizient verlangt. Dieser thermische Ausdehnungskoeffizient sollte im Hinblick auf mögliche thermische Nachverarbeitungen möglichst homogen, d.h. im Glasinneren und an der Oberfläche möglichst ähnlich oder gleich sein. Für die Charakterisierung der hydrolytischen und Laugenbeständigkeit gibt es eine Fülle von Vorschriften und Normen, insbesondere die ISO 719/720 für die hydrolytische und die ISO 695 für die Laugenbeständigkeit.

DE 10 2014 119 594 A1 lehrt Gläser, die auch für die Verwendung im pharmazeutischen Bereich bestimmt sind. Die dort beschriebenen Gläser weisen allerdings nur geringe Anteile an Reedmergnerit auf, so dass dort nicht die vorteilhaften Beständigkeitseigenschaften der vorliegenden Erfindung kombiniert mit vorteilhafter thermische Ausdehnung erzielbar sind.

EP 0 699 636 beschreibt Borosilikatgläser mit hoher chemischer Beständigkeit.

Aufgabe

Im Stand der Technik fehlt es an Gläsern, die eine gute hydrolytische Beständigkeit mit einer geringen Abtragrate beim Test der Laugenbeständigkeit nach ISO 695 verbinden. Zusätzlich sollen diese Gläser über vorteilhafte thermische Ausdehnungseigenschaften verfügen. Die Gläser sollten zudem in modernen Rohrzugfertigungsverfahren herstellbar sein.

Die Aufgabe wird durch die Gegenstände der Patentansprüche gelöst.

Beschreibung der Erfindung

Sowohl die hydrolytische Beständigkeit nach ISO 719/720 als auch die Laugenbeständigkeit nach ISO 695 beinhalten im Wesentlichen eine Resistenz des Glases gegen den Angriff von Hydroxylionen. Dabei ist im Falle der ISO 695 die Konzentration der Hydroxylionen in der Lauge dadurch festgelegt, dass eine Pufferlösung mit 0,5 mol/l Natriumhydroxid und 0,25 mol/l Natriumcarbonat verwendet wird. Im Falle der ISO 719/720 wird das Glas in Neutralwasser gegeben, dessen pH-Wert zunächst auf 5,5 eingestellt wird (Überprüfung durch Methylrotindikatorlösung), sich aber durch die Auflösung des Glases sehr rasch in den alkalischen Bereich bewegt. Es entsteht eine Pufferlösung aus den im Glas enthaltenen schwachen Säuren (bzw. Säureanhydriden), nämlich Kieselsäure und Borsäure, und starken Laugen (wie Natriumhydroxid), deren pH im Bereich 9 bis 10 liegt, siehe Susanne Fagerlund, Paul Ek, Mikko Hupa und Leena Hupa: On determining chemical durability of glasses, Glass Technol.: Eur. J. Glass Sci. Technol. A, December 2010, 51 (6), 235-240. Maßgeblich für den pH einer Pufferlösung sind die pKs-Werte der schwachen Säure(n), wobei der pKs-Wert von Borsäure ca. 0,5 unter dem pKs-Wert von Orthokieselsäure liegt; letztere ist der sich in verdünnten Lösungen einstellende Kieselsäuretyp, siehe Roland Benedix, Bauchemie für das Bachelorstudium, Springer Vieweg, Wiesbaden, 2014, S. 129. Durch den pH-Wert der entstehenden Pufferlösung, der sowohl vom Glastyp abhängt als auch mit dem Auflösungsfortschritt steigt, wird die Konzentration der Hydroxylionen festgelegt. Die durch diese Hydroxylionen erfolgende Auflösung erfolgt dann nach demselben Mechanismus wie bei der Laugenbeständigkeitsmessung.

Um ein Glas sowohl laugen- als auch hydrolytisch resistent zu machen, muss damit erstens die Abtragrate beim Test nach ISO 695 auf einen niedrigen Wert festgelegt werden. Zweitens muss der pH-Wert begrenzt werden, der sich während eines Tests nach ISO 719/720 und der dabei erfolgenden Auflösung einer gewissen Glasmenge in der wässrigen Testlösung ergibt. Je höher dieser pH-Wert im Verlaufe des Testes steigt, desto größer ist die Gefahr eines positiven Rückkopplungseffektes: mit steigendem pH steigt die Abtragrate, mit steigender Menge Abtrag in der wässrigen Lösung steigt wiederum deren pH-Wert an usw.

Chemisch beständige Gläser (hydrolytische Klasse HGB I gemäß ISO 719) erfahren während des Testes typischerweise einen Abtrag, der zu 100 μmol Glas in der wässrigen Lösung oder weniger führt, wobei der Abtrag im Allgemeinen umso weniger kongruent ist, je geringer er ist.

Da sich ein Vergleich von Gläsern auf feste Verhältnisse beziehen muss, definieren wir jetzt als maßgeblichen pH denjenigen pH, der sich nach als kongruent angenommener Auflösung von 50 μmol Glas in Neutralwasser ergibt. Erfindungsgemäß sind Gläser, bei denen dieser pH weniger als 8,99, bevorzugt weniger als 8,89, besonders bevorzugt weniger als 8,79, ganz besonders bevorzugt 8,7 oder weniger beträgt.

Die Abtragrate entsprechend ISO 695 beträgt erfindungsgemäß maximal 135 mg/(dm$^2$3h), maximal 125 mg/(dm$^2$3h), maximal 115 mg/(dm$^2$3h), maximal 105 mg/(dm$^2$3h), bevorzugt maximal 95 mg/(dm$^2$3h), besonders bevorzugt maximal 85 mg/(dm$^2$3h), ganz besonders bevorzugt maximal 75 mg/(dm$^2$3h). Letztere Zahl definiert die Grenze zwischen den Laugenklassen 1 und 2 gemäß der ISO 695. Gemeint ist die Abtragrate, die sich anhand der Formeln (2) und (3) für Gläser dieser Erfindung berechnen lässt.

Der thermische Ausdehnungskoeffizient liegt erfindungsgemäß bevorzugt zwischen 3 und 7 ppm/K, bevorzugt zwischen 4 und 6 ppm/K, besonders bevorzugt zwischen 4,5 und 5,5 ppm/K. Gemeint ist der Wert CTE, der sich anhand der Formel (5) für Gläser dieser Erfindung berechnen lässt. Es ist besonders vorteilhaft für die Verarbeitung der erfindungsgemäßen Gläser, wenn der thermische Ausdehnungskoeffizient innerhalb der oben genannten Bereiche liegt. Hohe CTE-Werte sind mit erhöhten Kühlspannungen verbunden und können daher aufwendige Kühlverfahren notwendig machen. Andererseits sind geringe CTE-Werte mit erhöhten Schmelzpunkten und Verarbeitungstemperaturen verbunden, die wiederum zu einem erhöhten Produktionsaufwand führen. Es ist daher vorteilhaft, den thermischen Ausdehnungskoeffizienten innerhalb der oben angegebenen Bereiche zu halten.

Die Aufgabe wird durch eine gezielte Kombination von stöchiometrischen Gläsern, also Gläsern, die in derselben Stöchiometrie auch als Kristalle existieren und deren Eigenschaft wegen der - wie in der Literatur an vielen Beispielen durch NMR-Messungen o.ä. überprüft - identischen Topologie der Baugruppen jeweils für Glas und Kristall als sehr ähnlich angenommen werden können, gelöst. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "Grundgläser" bzw. "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Erfindungsgemäß ist ein Glas mit einer Kombination von Grundgläsern, die durch die folgenden das Glas konstituierenden Phasen gekennzeichnet ist:

**Tabelle 1**

| konstituierende Phase | Min (Mol%) | Max (Mol%) |
|---|---|---|
| Reedmergnerit | 10 | 80 |
| Albit | 1 | 40 |
| Kalium-Reedmergnerit | 0 | 60 |
| Danburit | 0 | 30 |
| Cordierit | 0 | 20 |
| Willemit | 0 | 20 |
| Siliciumdioxid | 0 | 65 |
| Dibortrioxid | 0 | 20 |
| Pekovit | 0 | 20 |
| Maleevit | 0 | 25 |

Erfindungsgemäß ist auch ein Glas mit einer Kombination von Grundgläsern, die durch die folgenden das Glas konstituierenden Phasen gekennzeichnet ist, wobei die Summe der Anteile von Reedmergnerit, Kalium-Reedmergnerit und Albit wenigstens 50 Mol% beträgt:

**Tabelle 2**

| konstituierende Phase | Min (Mol%) | Max (Mol%) |
|---|---|---|
| Reedmergnerit | 20 | 50 |
| Albit | 15 | 40 |
| Kalium-Reedmergnerit | 0 | 20 |
| Danburit | 0 | 15 |

EP 3 473 604 B1

(fortgesetzt)

| konstituierende Phase | Min (Mol%) | Max (Mol%) |
|---|---|---|
| Cordierit | 0 | 15 |
| Willemit | 0 | 15 |
| Siliciumdioxid | 25 | 50 |
| Dibortrioxid | 1 | 10 |
| Pekovit | 0 | 10 |
| Maleevit | 0 | 10 |

Erfindungsgemäß ist auch ein Glas mit einer Kombination von Grundgläsern, die durch die folgenden das Glas konstituierenden Phasen gekennzeichnet ist:

**Tabelle 3**

| konstituierende Phase | Min (Mol%) | Max (Mol%) |
|---|---|---|
| Reedmergnerit | 9 | 50 |
| Albit | 1 | 15 |
| Kalium-Reedmergnerit | 0 | 20 |
| Danburit | 0 | 30 |
| Cordierit | 0 | 20 |
| Willemit | 0 | 20 |
| Siliciumdioxid | 25 | 65 |
| Dibortrioxid | 0 | 10 |
| Pekovit | 0 | 20 |
| Maleevit | 0 | 25 |

Die Zusammensetzung ist im Hinblick auf die das Glas konstituierenden Phasen innerhalb der hierin beschriebenen Grenzen gewählt. Die das Glas konstituierenden Phasen liegen als solche im Glasprodukt selbstverständlich nicht kristallin, sondern amorph vor. Das heißt aber nicht, dass die konstituierenden Phasen im amorphen Zustand völlig andere Baugruppen als im kristallinen Zustand haben. Wie oben gesagt, ist die Topologie der Baugruppen vergleichbar, also z.B. die Koordination der beteiligten Kationen mit umgebenden Sauerstoffatomen oder der sich aus der Koordination und der Stärke der Bindung zwischen diesen Kationen und umgebenden Sauerstoffatomen ergebende interatomare Abstand. Daher lassen sich viele Eigenschaften des Glases der Erfindung gut anhand der konstituierenden Phasen beschreiben, insbesondere um die erfinderische Leistung und die mit der Erfindung überwundenen Probleme darzustellen (vgl. dazu Conradt R., loc. cit.). Dabei kann das Glas natürlich nicht nur unter Verwendung der entsprechenden Kristalle hergestellt werden, sondern auch unter Verwendung der üblichen Glasrohstoffe, solange nur die stöchiometrischen Verhältnisse die Ausbildung der entsprechenden Baugruppen der Grundgläser ermöglichen.

Die Auswahl der Phasen erfolgt im Hinblick auf ihren Einfluss auf die hydrolytische und Laugenbeständigkeit sowie die thermische Ausdehnung. Im folgenden werden Berechnungsverfahren angegeben, wie sich diese drei Größen aus einer vorgegebenen Zusammensetzung aus konstituierenden Phasen berechnen lassen. Diese Berechnungsverfahren sind maßgeblich sowohl bei der Auswahl der konstituierenden Phasen als auch bei eben jener Zusammensetzung eines erfindungsgemäßen Glases aus diesen konstituierenden Phasen.

**Berechnung des pH-Wertes in der wässrigen Lösung beim Test der hydrolytischen Beständigkeit**

Die Berechnung des pH-Wertes in wässriger Lösung geht von der Zusammensetzungsangabe in einfachen Oxiden aus. In der verdünnten Lösung der Glasbestandteile gehen die entsprechenden Kationen in die höchstoxidierten Hydroxide über, siehe die Tabelle 4. Die Abgabe eines $H^+$ bzw. $OH^-$ dieser Hydroxide wird jeweils durch einen entsprechenden pKs- bzw. pKb-Wert beschrieben.

4

Wir beziehen uns beim pH-Wert auf den Wert, der nach Auflösung von 50 $\mu$mol in einem Liter der wässrigen Lösung nach Abkühlung auf Raumtemperatur (25°C) vorliegt.

**Tabelle 4**

| # | Oxid | Hydroxid | | |
|---|---|---|---|---|
| 1. | $SiO_2$ | $H_4SiO_4$ | $H_4SiO_4 \rightarrow H_3SiO_4^- + H^+$ | pKs = 9,7 [1] |
| | | | $H_3SiO4^- \rightarrow H_2SiO_4^{-2} + H^+$ | pKs = 11,9 [1] |
| 2. | $B_2O_3$ | $H_3BO_3$ | $H_3BO_3 \rightarrow H_2BO_3^- + H^+$ | pKs = 9,23 [2] |
| 3. | $Al_2O_3$ | $H_3AlO_3$ | $H_3AlO_3 \rightarrow H_2AlO_3^- + H^+$ | pKs = 12,3 [3] |
| | | | $H_2AlO_2^+ + H_2O \rightarrow H_3AlO_3 + H^+$ | pKs = 5,7 [3] |
| 4. | ZnO | $H_2ZnO_2$ | $Zn^{+2} + H_2O \rightarrow ZnOH^+ + H^+$ | pKs = 9,05 [4] |
| | | | $ZnOH^+ + H_2O \rightarrow Zn(OH)_2 + H^+$ | pKs = 9,75 [4] |
| | | | $Zn(OH)_2 + H_2O \rightarrow Zn(OH)_3^- + H^+$ | pKs = 10,1 [4] |
| | | | $Zn(OH)_3^- + H_2O \rightarrow Zn(OH)_4^- + H^+$ | pKs = 10,05 [4] |
| 5. | MgO | $Mg(OH)_2$ | $Mg(OH)_2 \rightarrow Mg(OH)^+ + OH^-$ | pKb = -2 [5] |
| | | | $Mg(OH)^+ \rightarrow Mg^{++} + OH^-$ | pKb = 2,58 [6] |
| 6. | CaO | $Ca(OH)_2$ | $Ca(OH)_2 \rightarrow Ca(OH)^+ + OH^-$ | pKb = -2 [5] |
| | | | $Ca(OH)^+ \rightarrow Ca^{++} + OH^-$ | pKb = 1,3 [7] |
| 7. | SrO | $Sr(OH)_2$ | $Sr(OH)_2 \rightarrow Sr(OH)^+ + OH^-$ | pKb = -2 [5] |
| | | | $Sr(OH)^+ \rightarrow Sr^{++} + OH^-$ | pKb = 0,82 [8] |
| 8. | BaO | $Ba(OH)_2$ | $Ba(OH)_2 \rightarrow Ba(OH)^+ + OH^-$ | pKb = -2 [5] |
| | | | $Ba(OH)^+ \rightarrow Ba^{++} + OH^-$ | pKb = 0,62 [9] |
| 9. | $Na_2O$ | NaOH | $NaOH \rightarrow Na^+ + OH^-$ | pKb = -0,77 [10] |
| 10. | $K_2O$ | KOH | $KOH \rightarrow K^+ + OH^-$ | pKb = -2 [11] |

[1]) Pure Appl. Chem., 1969, Vol. 20, No. 2, pp. 133-236, Ziffer 176; Wert von der dort mit "G40" bezeichneten Quelle.
[2]) Pure Appl. Chem., 1969, Vol. 20, No. 2, pp. 133-236, Ziffer 15; Wert von der dort mit "M11" bezeichneten Quelle. Laut der dort mit 14" bezeichneten Quelle ist der zweite pKs-Wert von Borsäure größer als "14"; diese Dissoziation braucht also nicht berücksichtigt zu werden.
[3]) David W. Hendricks, Water Treatment Unit Processes: Physical and Chemical, CRC Taylor and Francis, Boca Raton, London, New York, 2006, S. 307; Werte von den dort mit "4", "5", "11", "12" bezeichneten Quellen.
[4]) Artur Krezel, Wolfgang Maret, The biological inorganic chemistry of zinc ions, Archives of Bio-chemistry and Biophysics (2016), S. 1-17
[5]) Wie bei Bariumhydroxid, siehe Pure Appl. Chem., 1969, Vol. 20, No. 2, pp. 133-236, Ziffer 12, gehen wir davon aus, dass die $M(OH)_2 \rightarrow M(OH)^+ + OH^-$ für alle Erdalkali M in jedem Fall vollständig abläuft; wir setzen für diese erste Dissoziation als pKb-Wert den höchsten in dieser Tabelle auftretenden pKb-Wert, nämlich den von Kalilauge, an.
[6]) Pure Appl. Chem., 1969, Vol. 20, No. 2, pp. 133-236, Ziffer 115; Wert von der dort mit "S74" bezeichneten Quelle.
[7]) Pure Appl. Chem., 1969, Vol. 20, No. 2, pp. 133-236, Ziffer 18; Wert von der dort mit "D9" bezeichneten Quelle.
[8]) Pure Appl. Chem., 1969, Vol. 20, No. 2, pp. 133-236, Ziffer 180; Wert von der dort mit "G26" bezeichneten Quelle.
[9]) Pure Appl. Chem., 1969, Vol. 20, No. 2, pp. 133-236, Ziffer 12; Wert von der dort mit "B31" bezeichneten Quelle.
[10]) Pure Appl. Chem., 1969, Vol. 20, No. 2, pp. 133-236, Ziffer 178; Wert von der dort mit "G26" bezeichneten Quelle.
[11]) Pure Appl. Chem., 1969, Vol. 20, No. 2, pp. 133-236, Ziffer 164; Wert von der dort mit "K2" bezeichneten Quelle.

Der pH-Wert folgt bei gegebener Zusammensetzung durch Lösen des Gleichungssystems für die verschiedenen Konzentrationen [...] (für pKs und pKb sind die oben gelisteten Werte einzusetzen):

Gleichungssystem (1)

1. $[H_2SiO_4^{--}] [H^+] / [H_3SiO_4^-] = 10^{-pks}$,
2. $[H_3SiO_4^-] [H^+] / [H_4SiO_4] = 10^{-pks}$,

3. $[H_2SiO_4^{--}] + [H_3SiO_4^-] + [H_4SiO_4] = 50\ \mu mol/l * C_{SiO2}$,

4. $[H_2BO_3^-] [H^+] / [H_3BO_3] = 10^{-pks}$,

5. $[H2BO_3^-] + [H_3BO_3] = 50\ \mu mol/l * 2 * C_{B2O3}$,

6. $[H_4AlO_4^-] [H^+] / [H_3AlO_3] = 10^{-pks}$, $[H_3AlO_3] [H^+] / [H_2AlO_2^+] = 10^{-pks}$,

7. $[H_4AlO_4^-] + [H_3AlO_3] + [H_2AlO_2^+] = 50\ \mu mol/l * 2 * c_{Al2O3}$,

8. $[ZnOH^+] [H^+] / [Zn^{++}] = 10^{-pks}$,

9. $[Zn(OH)_2] [H^+] / [ZnOH^+] = 10^{-pks}$,

10. $[Zn(OH)_3^-] [H^+] / [Zn(OH)_2] = 10^{-pks}$,

11. $[Zn(OH)_4^{--}] [H^+] / [Zn(OH)_3^-] = 10^{-pks}$,

12. $[ZnOH^+] + [Zn^{++}] + [Zn(OH)_2] + [Zn(OH)_3^-] + [Zn(OH)_4^{--}] = 50\ \mu mol/l * c_{ZnO}$,

13. $[MgOH^+] [OH^-] / [Mg(OH)_2] = 10^{-pkb}$, $[Mg^{++}] [OH^-] / [MgOH^+] = 10^{-pkb}$,

14. $[MgOH^+] + [Mg(OH)_2] + [Mg^{++}] = 50\ \mu mol/l * c_{MgO}$,

15. $[CaOH^+] [OH^-] / [Ca(OH)_2] = 10^{-pkb}$, $[Ca^{++}] [OH^-] / [CaOH^+] = 10^{-pkb}$,

16. $[CaOH^+] + [Ca(OH)_2] + [Ca^{++}] = 50\ \mu mol/l * c_{CaO}$,

17. $[SrOH^+] [OH^-] / [Sr(OH)_2] = 10^{-pkb}$, $[Sr^{++}] [OH^-] / [SrOH^+] = 10^{-pkb}$,

18. $[SrOH^+] + [Sr(OH)_2] + [Sr^{++}] = 50\ \mu mol/l * c_{SrO}$,

19. $[BaOH^+] [OH^-] / [Ba(OH)_2] = 10^{-pkb}$, $[Ba^{++}] [OH^-] / [BaOH^+] = 10^{-pkb}$,

20. $[BaOH^+] + [Ba(OH)_2] + [Ba^{++}] = 50\ \mu mol/l * c_{BaO}$,

21. $[Na^+] [OH^-] / [NaOH] = 10^{-pkb}$,

22. $[Na^+] + [NaOH] = 50\ \mu mol/l * 2 * c_{Na2O}$,

23. $[K^+] [OH^-] / [KOH] = 10^{-pkb}$,

24. $[K^+] + [KOH] = 50\ \mu mol/l * 2 * c_{K2O}$,

25. $[OH^-] [H^+] = 10^{-14}$,

26. $2*[H_2SiO_4^{--}] + [H_3SiO_4^-] + [H2BO_3^-] + [H_4AlO_4^-] + 2*[Zn(OH)_4^{--}] + [Zn(OH)_3^-] + [OH^-] = [H_2AlO_2^+] + 2*[Zn^{++}] + [ZnOH^+] + 2*[Ba^{++}] + [BaOH^+] + 2*[Ca^{++}] + [CaOH^+] + 2* [Mg^{++}] + [MgOH^+] + [Na^+] + [K^+] + [H^+]$

Die Gleichungen 1 - 25 sind Gleichgewichtsbedingungen, und Gleichung 26 ist die Elektroneutralitätsbedingung. Entsprechend der allgemeinen Konvention bezeichnen Konzentrationsangaben in eckigen Klammern ("[...]") Konzentrationen in "mol/l".

Das Gleichungssystem ist mit einem der gängigen mathematischen Codes wie z.B. MATHEMATICA von Wolfram Research Inc. eindeutig lösbar. MATHEMATICA liefert eine Liste von Lösungen, von denen jedoch nur eine die notwendige Zusatzbedingung erfüllt, dass alle Konzentrationen positive Werte haben müssen.

Der pH-Wert folgt definitionsgemäß als negativer dekadischer Logarithmus von $[H^+]$.

## Berechnung der Laugenbeständigkeit nach ISO 695

Der Erfindung liegt an dieser Stelle ein überraschenderweise gefundener Zusammenhang zwischen einer mit Hilfe von topologischen Betrachtungen konstruierten Größe und der beim Test nach der ISO 695 gemessenen Abtragrate zugrunde.

Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.

In DE 10 2014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silicium-Sauerstoffbindung geteilt wird, so dass sich für Quarzglas eine Zahl von (gerundet) 1,333333333 Abstandsbedingungen und (gerundet) 1,666666667 Winkelbedingungen pro Atom ergibt. Das entspricht, wie in DE 10 2014 119 594 A1 dargelegt, der direkten Analyse der Topologie von Quarzglas, wenn man alle Abstands- und Winkelbedingungen einfach zählt und die Winkelbedingungen der Silicium-Sauerstoff-Silicium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Freiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 bzw. 1,666666667. Die Differenzen sind entsprechend die Anzahlen der Abstands- bzw. Winkelfreiheitsgrade pro Atom. Bei den Winkelfreiheitsgraden kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkel-bedingungen bezeichnet; die Differenz zu (gerundet) 1,666666667 entsprechend als 3D-Winkelfreiheitsgrade.

Überraschenderweise findet man einen Zusammenhang zwischen der Zahl der 3D-Winkelfreiheitsgrade pro Atom und der Abtragrate r beim ISO 695 Test. Dieser an einer Vielzahl von Borosilicatgläsern ausgetestete Zusammenhang ist gegeben durch:

$$r = c \cdot (6{,}8 + (1 + f)^8) \; , \qquad\qquad (2)$$

"c" ist eine Konstante mit Dimension mg/(dm²3h); der numerische Wert lautet 7,57. "f" ist die Zahl der 3D-Winkelfreiheitsgrade pro Atom. Der Exponent "8" ist empirisch gefunden worden. Der konstante Term "6,8" dient zur Korrektur der idealisierten Annahmen über Quarzglas, so dass mit (2) auch Quarzglas beschrieben wird.

Da die erfindungsgemäßen Gläser eine Kombination der oben angegebenen konstituierenden Phasen aufweisen, ist es für die Berechnung der Zahl der 3D-Winkelfreiheitsgrade pro Atom zweckmäßig, diese zunächst für jede konstituierende Phase numerisch anzugeben. Es gilt:

**Tabelle 5**

| Konstituierende Phase | Formel (auf ein einfaches Oxid normiert) | Atome pro Baueinheit | Zahl der 3D-Winkelfrei-heitsgrade pro Atom |
|---|---|---|---|
| Reedmergnerit | $(Na_2O \cdot B_2O_3 \cdot 6SiO_2)/8$ | 26/8 | 0,235470229 |
| Albit | $(Na_2O \cdot Al_2O_3 \cdot 6SiO_2)/8$ | 26/8 | 0,318898019 |
| Kalium-Reedmergnerit | $(K_2O \cdot B_2O_3 \cdot 6SiO_2)/8$ | 26/8 | 0,238787725 |
| Danburit | $(CaO \cdot B_2O_3 \cdot 2SiO_2)/4$ | 13/4 | 0,325810349 |
| Cordierit | $(2MgO \cdot 2Al_2O_3 \cdot 5SiO_2)/9$ | 29/9 | 0,427525473 |
| Willemit | $(2ZnO \cdot SiO_2)/3$ | 7/3 | 0,725827911 |
| Siliciumdioxid | $SiO_2$ | 3 | 0 |
| Dibortrioxid | $B_2O_3$ | 5 | 1,666666667 |
| Pekovit | $(SrO \cdot B_2O_3 \cdot 2SiO_2)/4$ | 13/4 | 0,334391592 |
| Maleevit | $(BaO \cdot B_2O_3 \cdot 2SiO_2)/4$ | 13/4 | 0,33848284 |

Die Zahlenwerte sind nach dem in DE 10 2014 119 594 A1 angegebenen Verfahren berechnet worden, wobei hier die Zahl der Winkelfreiheitsgrade für alle Kationen berechnet worden ist und zwar so wie in DE 10 2014 119 594 A1 aber dort nur für Bor und Aluminium; außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Die dazu notwendigen Koordinationszahlen sind der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind.

Die Rechenvorschrift zur Bestimmung der 3D-Winkelfreiheitsgrade f pro Atom am fertigen Glas lautet damit:

$$f = \frac{\sum_{i=1}^{n} c_i \cdot z_i \cdot f_i}{\sum_{i=1}^{n} c_i \cdot z_i} \; , \qquad\qquad (3)$$

wobei $c_i$ der molare Anteil der i-ten konstituierenden Phase in der betrachteten Glaszusammensetzung ist, $Z_i$ die Zahl der Atome pro Baueinheit in der i-ten konstituierenden Phase und $f_i$ die Zahl der Winkelfreiheitsgrade pro Atom in der i-ten konstituierenden Phase. "n" ist die Zahl der konstituierenden Phasen.

Für die Gläser dieser Erfindung gilt, dass die Anzahl der Winkelfreiheitsgrade pro Atom im Bulk weniger als 0,25, noch weiter bevorzugt bis zu 0,244, noch weiter bevorzugt weniger als 0,23, noch weiter bevorzugt weniger als 0,22, noch weiter bevorzugt weniger als 0,21, noch weiter bevorzugt bis zu 0,204, noch weiter bevorzugt weniger als 0,19, noch weiter bevorzugt weniger als 0,18, noch weiter bevorzugt weniger als 0,17, noch weiter bevorzugt weniger als 0,16, noch weiter bevorzugt bis zu 0,152 beträgt. Wird sichergestellt, dass die Anzahl der Winkelfreiheitsgrade pro Atom diesen Wert nicht überschreitet, so bleibt die Fragilität in einem erwünschten Bereich. Insbesondere ist dieser Wert vorteilhaft, um die Herstellung auch dünnster Glasartikel zu ermöglichen. Insbesondere beträgt die Anzahl der Winkelfreiheitsgrade pro Atom wenigstens 0,1.

**Thermischer Ausdehnungskoeffizient**

Überraschenderweise lässt sich auch die Lage des thermischen Ausdehnungskoeffizienten im angestrebten Bereich mit Hilfe einer sehr einfachen Rechenvorschrift darstellen. Diese ergibt sich über die mittlere Bindungsstärke.

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts- Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befindet kann, was umgekehrt in rein oxidischen Gläsern nicht vorkommen kann. Diese Werte sind tabelliert, z.B. in DE 10 2014 119 594 A1:

**Tabelle 6**

| Kation | Potentialtopftiefe / (kJ/mol) |
|--------|-------------------------------|
| Si | 1864 |
| B | 1572,5 |
| Al | 1537 |
| Zn | 728 |
| Mg | 999 |
| Ca | 1063 |
| Sr | 1005 |
| Ba | 976 |
| Na | 440,5 |
| K | 395 |

Die Werte für Sr, Ba und Zn stammen nicht aus DE 10 2014 119 594 A1, sind aber nach genau derselben, dort beschriebenen Methode mit den dort zitierten Quellen berechnet worden.

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}}, \qquad (4)$$

Dabei ist m die Zahl der auftretenden Kationentypen, $E_{pot,j}$ die oben tabellierte Potentialtopftiefe für den j-ten Kationentyp und $Z_{j,i}$ die Anzahl der Kationen des j-ten Typs in der i-ten konstituierenden Phase. Die Summen über j sind im Folgenden tabelliert:

**Tabelle 7**

| konstituierende Phase | $\sum_{j=1}^{m} z_{i,j}$ | $\sum_{j=1}^{m} z_{i,j} \cdot E_{pot,j}$ / (kJ/mol) |
|---|---|---|
| Reedmergnerit | 1,25 | 1901,25 |
| Albit | 1,25 | 1892,38 |
| Kalium-Reedmergnerit | 1,25 | 1889,88 |
| Danburit | 1,25 | 1984 |
| Cordierit | 1,22 | 1940,67 |
| Willemit | 1,00 | 1106,67 |
| Siliciumdioxid | 1,00 | 1864,00 |
| Dibortrioxid | 2,00 | 3145,00 |
| Pekovit | 1,25 | 1969,5 |
| Maleevit | 1,25 | 1962,5 |

Diese mittlere Bindungsstärke hängt, wie z:B. auch bei Metallen, siehe H. Föll, loc. cit., umgekehrt proportional mit dem thermischen Ausdehnungskoeffizienten zusammen. Die Auswertung einer Reihe verschiedener Gläser, darunter kommerzieller Gläser wie beispielsweise Borofloat33, Borofloat40, AF45, AF32 führt zu folgender Formel:

$$CTE = \left( \frac{51815\left(\frac{kJ}{Mol}\right)}{\overline{E_{pot}}} - 27,205 \right) ppm/K, \qquad (5)$$

Da die Bindungsstärke umgekehrt proportional zum Schmelzpunkt ist, gilt eine umgekehrte Proportionalität auch zwischen Schmelzpunkt und Ausdehnungskoeffizient, siehe wiederum H. Föll, loc. cit. Da der Schmelzpunkt bei nicht-stöchiometrischen Gläsern nicht genau definiert ist, gilt zwischen der im Allgemeinen als Schmelzpunkt bezeichneten Temperatur, bei der die Viskosität 100 dPas beträgt, und dem Ausdehnungskoeffizienten nur ein tendenzieller Zusammenhang. Über diesen ist aber sichergestellt, dass die erfindungsgemäßen Gläser schmelzbar sind. Während die Forderung nach einer guten Schmelzbarkeit einen möglichst großen thermischen Ausdehnungskoeffizienten nahelegt, legt umgekehrt die Forderung nach möglichst geringen thermischen Spannungen bei einer eventuellen thermischen Nachprozessierung einen möglichst geringen thermischen Ausdehnungskoeffizienten nahe. Die Kombination beider Forderungen führt auf den hier bevorzugten mittleren Bereich für den Ausdehnungskoeffizienten bzw. die mittlere Potentialtopftiefe.

Die Gläser dieser Erfindung weisen mittlere Potentialtopftiefen von 1515 kJ/mol bis 1634 k//mol, mehr bevorzugt 1538 kJ/mol bis 1634 kJ/mol, mehr bevorzugt 1561 kJ/mol bis 1634 kJ/mol und besonders bevorzugt 1584 kJ/mol bis 1634 kJ/mol auf.

**Auswahl geeigneter konstituierender Phasen**

Reedmergnerit

Im Hinblick auf die Laugen- und hydrolytische Beständigkeit wird als erste Phase Reedmergnerit (American Mineralogist, Volume 50, pages 1827-1850, 1965) ausgesucht. Reedmergnerit hat eine geringe Anzahl von 3D-Winkelfreiheitsgraden pro Atom, was vorteilhaft für die Laugenbeständigkeit ist. Es besteht zu 75 Mol% aus $SiO_2$ und 12,5 Mol% aus $Na_2O$, was in Wasser, wie oben beschrieben, eine Pufferlösung ergibt. Deren pH-Wert wird durch die zusätzlichen 12,5 Mol% $B_2O_3$ (im Verhältnis zu zusätzlichem $SiO_2$) abgesenkt. Unter einem Mol Reedmergnerit wird erfindungsgemäß ein Mol $(Na_2O \cdot B_2O_3 \cdot 6SiO_2)/8$ verstanden.

Der Anteil an Reedmergnerit in dem erfindungsgemäßen Glas beträgt 10 bis 80 Mol%. Der Mindestanteil an Reedmergnerit sollte nicht unterschritten werden, da andernfalls die erfindungsgemäß hohe Laugenbeständigkeit und hydrolytische Beständigkeit nicht erreicht wird.

Sein Anteil beträgt in einer ersten bevorzugten Ausführungsform sogar wenigstens 15 Mol%, wenigstens 16 Mol% oder wenigstens 20 Mol%, insbesondere wenigstens 24 Mol%, wenigstens 26 Mol%, wenigstens 28 Mol% oder wenigstens 30 Mol%. Um der Entmischungsneigung des Glases entgegen zu wirken, ist der Anteil an Reedmergnerit vorzugsweise begrenzt auf höchstens 70 Mol%, bevorzugt höchstens 60 Mol%, mehr bevorzugt höchstens 50 Mol% oder besonders bevorzugt höchstens 45 Mol% oder höchstens 40 Mol%. In einer Ausführungsform ist der Anteil dieser Komponente auf höchstens 35 Mol% begrenzt. Bevorzugte Anteilsbereiche für die Komponente Reedmergnerit sind mithin: 24 Mol% bis 70 Mol%, 26 Mol% bis 60 Mol% und 28 Mol% bis 40 Mol%.

In einer zweiten bevorzugten Ausführungsform beträgt der Reedmergnerit-Anteil wenigstens 11 Mol%, wenigstens 12 Mol%, insbesondere wenigstens 13 Mol%, wenigstens 15 Mol%, wenigstens 18 Mol% oder wenigstens 20 Mol%. Um der Entmischungsneigung des Glases entgegen zu wirken, ist der Anteil an Reedmergnerit vorzugsweise begrenzt auf höchstens 40 Mol%, bevorzugt höchstens 36 Mol%, mehr bevorzugt höchstens 35 Mol% oder besonders bevorzugt höchstens 30 Mol% oder höchstens 29 Mol%. In einer Ausführungsform ist der Anteil dieser Komponente auf höchstens 22 Mol% begrenzt. Bevorzugte Anteilsbereiche für die Komponente Reedmergnerit sind mithin: 11 Mol% bis 40 Mol%, 12 Mol% bis 36 Mol% und 13 Mol% bis 35 Mol% und 11 bis 22 Mol%.

Albit

Zur Unterdrückung einer möglichen Entmischungsneigung eines reinen Borosilicatsystems wird als zweite Phase das Aluminium-Analogon des Reedmergnerit beigegeben, der Albit (American Mineralogist, Volume 81, pages 1344-1349, 1996), siehe zur Entmischungsfrage J.W. Greig, Immiscibility in silicate melts, Am. J. Sci., 5th ser., Vol. 13 (1927), 1-44 und 133-154. Unter einem Mol Albit wird erfindungsgemäß ein Mol $(Na_2O \cdot Al_2O_3 \cdot 6SiO_2)/8$ verstanden. Ferner erhöht ein gewisser Anteil an Albit die chemische Vorspannbarkeit der Gläser.

Der Anteil an Albit in dem erfindungsgemäßen Glas beträgt 1 bis 40 Mol%. Der Mindestanteil an Albit sollte nicht unterschritten werden, da andernfalls eine zu große Entmischungsneigung zu befürchten ist.

Sein Anteil beträgt in einer ersten bevorzugten Ausführungsform sogar wenigstens 4 Mol% oder wenigstens 10 Mol%, insbesondere wenigstens 15 Mol%, wenigstens 20 Mol%, wenigstens 23 Mol% oder wenigstens 25 Mol%. Um nicht eine Verschlechterung der hydrolytischen Beständigkeit zu riskieren, ist der Anteil an Albit vorzugsweise begrenzt auf höchstens 35 Mol%, bevorzugt höchstens 32 Mol%, mehr bevorzugt höchstens 30 Mol% oder besonders bevorzugt höchstens 29 Mol%. Bevorzugte Anteilsbereiche für die Komponente Albit sind mithin: 15 Mol% bis 35 Mol%, 20 Mol% bis 32 Mol% und 23 Mol% bis 30 Mol%.

In einer zweiten bevorzugten Ausführungsform beträgt der Anteil an Albit wenigstens 1 Mol%, wenigstens 2 Mol% oder wenigstens 3 Mol%. Um nicht eine Verschlechterung der hydrolytischen Beständigkeit zu riskieren, ist der Anteil an Albit vorzugsweise begrenzt auf höchstens 10 Mol%, bevorzugt höchstens 9 Mol%, mehr bevorzugt höchstens 8 Mol% oder besonders bevorzugt höchstens 6 Mol%. Bevorzugte Anteilsbereiche für die Komponente Albit sind mithin: 1 Mol% bis 10 Mol%, 2 Mol% bis 9 Mol% und 3 Mol% bis 8 Mol%.

Kalium-Reedmergnerit

Ebenfalls zur Unterdrückung einer möglichen Entmischungsneigung wird als dritte Phase des Kalium-Analogon des Reedmergnerit beigegeben (Mineralogical Magazine 57 (1993) 157-164). Unter einem Mol Kalium-Reedmergnerit wird ein Mol $(K_2O \cdot B_2O_3 \cdot 6SiO_2)/8$ verstanden.

Der Anteil an Kalium-Reedmergnerit in dem erfindungsgemäßen Glas beträgt 0 bis 60 Mol% oder 0 bis 40 Mol%. Ein gewisser Anteil an Kalium-Reedmergnerit kann sinnvoll sein, um eine zu große Entmischungsneigung zu unterdrücken.

Sein Anteil beträgt in bevorzugten Ausführungsformen sogar wenigstens 1 Mol%, wenigstens 3 Mol% oder wenigstens 5 Mol%. Um nicht eine Verschlechterung der hydrolytischen Beständigkeit zu riskieren, ist der Anteil an Kalium-Reedmergnerit vorzugsweise begrenzt auf höchstens 40 Mol%, bevorzugt höchstens 30 Mol%, mehr bevorzugt höchstens 20 Mol% oder besonders bevorzugt höchstens 10 Mol%. Bevorzugte Anteilsbereiche für die Komponente Kalium-Reedmergnerit sind mithin: 0 Mol% bis 30 Mol%, 0 Mol% bis 20 Mol% und 0 Mol% bis 10 Mol%. In einer Ausführungsform ist das Glas frei von Kalium-Reedmergnerit.

In einer ersten bevorzugten Ausführungsform beträgt die Summe der Anteile von Reedmergnerit, Kalium-Reedmergnerit und Albit wenigstens 52 Mol%, wenigstens 54 Mol%, wenigstens 55 Mol% oder wenigstens 56 Mol%. Diese Summe ist vorzugsweise begrenzt auf höchstens 70 Mol%, höchstens 65 Mol% oder höchstens 60 Mol%. Es hat sich gezeigt, dass dieses Zusammensetzungsmerkmal für einen Ausgleich von hydrolytischer und Laugenbeständigkeit sowie Entmischungsneigung sinnvoll ist. Gleiches gilt für die Summe der Anteile von Reedmergnerit und Albit, die vorzugsweise wenigstens 52 Mol%, wenigstens 54 Mol%, wenigstens 55 Mol% oder wenigstens 56 Mol% beträgt. Diese Summe ist vorzugsweise begrenzt auf höchstens 70 Mol%, höchstens 65 Mol% oder höchstens 60 Mol%. In einer Ausführungsform ist der Anteil an Reedmergnerit größer als der Anteil an Kalium-Reedmergnerit, insbesondere um einen Faktor von wenigstens 2, 3, 4, 5 oder 6. Insbesondere gilt im Hinblick auf die Anteilsverhältnisse von Reedmergnerit zu Albit, dass diese in einem Bereich von 0,5 zu 1 bis 1,5 zu 1 liegen, insbesondere in einem Bereich von 0,8 zu 1 bis 1,4 zu 1, in einem Bereich von 0,9 zu 1 bis 1,3 zu 1 oder in einem Bereich von >1 zu 1 bis 1,2 zu 1. Es ist bevorzugt, dass der Anteil Reedmergnerit größer ist als derjenige von Albit, insbesondere um einen relativen Anteil von 5%.

In einer zweiten bevorzugten Ausführungsform beträgt die Summe der Anteile von Reedmergnerit, Kalium-Reedmergnerit und Albit wenigstens 10 Mol%, wenigstens 15 Mol%, wenigstens 20 Mol% oder wenigstens 25 Mol%. Diese Summe ist vorzugsweise begrenzt auf höchstens 45 Mol%, höchstens 40 Mol% oder höchstens 35 Mol%. Es hat sich gezeigt, dass dieses Zusammensetzungsmerkmal für einen Ausgleich von hydrolytischer und Laugenbeständigkeit sowie Entmischungsneigung sinnvoll ist. Gleiches gilt für die Summe der Anteile von Reedmergnerit und Albit, die vorzugsweise wenigstens 10 Mol%, wenigstens 14 Mol%, wenigstens 19 Mol% oder wenigstens 24 Mol% beträgt. Diese Summe ist vorzugsweise begrenzt auf höchstens 44 Mol%, höchstens 39 Mol% oder höchstens 34 Mol%. In einer Ausführungsform ist der Anteil an Reedmergnerit größer als der Anteil an Kalium-Reedmergnerit, insbesondere um einen Faktor von wenigstens 2, 3, 4, 5 oder 6. Insbesondere gilt im Hinblick auf die Anteilsverhältnisse von Reedmergnerit zu Albit, dass diese in einem Bereich von 4 zu 1 bis 11 zu 1 liegen, insbesondere in einem Bereich von 5 zu 1 bis 10 zu 1, in einem Bereich von 5,5 zu 1 bis 9 zu 1 oder in einem Bereich von 6 zu 1 bis 8 zu 1.

Danburit, Cordierit, Pekovit, Maleevit, $SiO_2$, $B_2O_3$

Alle drei bisher genannten konstituierenden Phasen sind alkalihaltig. Alkalihaltige Gläser haben je nach Höhe des Alkaligehaltes höhere Ausdehnungskoeffizienten (z.B. 8 bis 10 ppm/K) als erfindungsgemäß bevorzugt. Zum Ausgleich werden Phasen beigemischt, deren Beitrag den Ausdehnungskoeffizienten entweder weit nach unten drückt ($SiO_2$, $B_2O_3$) oder zu mittleren Werten verschiebt (Boro- bzw- Aluminosilicate der Erdalkalis: Danburit, Cordierit, Pekovit, Maleevit; Willemit siehe American Mineralogist, Volume 59, pages 79-85, 1974, American Mineralogist, Volume 77, pages 407-411, 1992, The Canadian Mineralogist Vol. 42, pp. 107-119, 2004).

Bezüglich der Laugen- und hydrolytischen Beständigkeit verhalten sich diese weiteren Phasen unterschiedlich, so dass eine Mischung anzustreben ist. Danburit, Pekovit und Maleevit führen im Verhältnis zu Reedmergnerit zu einer geringen Absenkung der Laugenbeständigkeit. Cordierit und Willemit führen zu einer höheren Absenkung der Laugenbeständigkeit. Siliciumoxid führt zu einer drastischen Erhöhung der Laugenbeständigkeit, das (im Glas als trigonal koordiniert angenommene, siehe J.E. Shelby, Introduction into Glass Science and Technology, Royal Society of Chemistry, Cambridge, UK, 2005, S. 93) Boroxid zu einer drastischen Absenkung der Laugenbeständigkeit. Dafür führt Boroxid wieder zu einer Absenkung des pHs in der wässrigen Lösung beim Test der hydrolytischen Beständigkeit.

Unter einem Mol Danburit wird ein Mol $(CaO \cdot B_2O_3 \cdot 2SiO_2)/4$ verstanden. Der Anteil an Danburit in den erfindungsgemäßen Gläsern beträgt aufgrund obiger Erwägungen höchstens 30 Mol% oder höchstens 20 Mol%, vorzugsweise höchstens 18 Mol%, höchstens 15 Mol% oder höchstens 12 Mol%. Zur erfindungsgemäßen Beeinflussung des thermischen Ausdehnungskoeffizienten hat sich allerdings ein Anteil von wenigstens 1 Mol%, wenigstens 3 Mol%, insbesondere wenigstens 5 Mol% oder wenigstens 7 Mol% bewährt.

Unter einem Mol Cordierit wird ein Mol $(2MgO \cdot 2Al_2O_3 \cdot 5SiO_2)/9$ verstanden. Der Anteil an Cordierit in den erfindungsgemäßen Gläsern beträgt aufgrund obiger Erwägungen höchstens 20 Mol%, vorzugsweise höchstens 10 Mol%, höchstens 5 Mol% oder höchstens 3 Mol%. In einer Ausführungsform ist das Glas frei von Cordierit, in einer anderen Ausführungsform enthält das Glas Cordierit in einer Menge von mehr als 0,1 Mol%.

Unter einem Mol Willemit wird ein Mol $(2ZnO \cdot SiO_2)/3$ verstanden. Der Anteil an Willemit in den erfindungsgemäßen Gläsern beträgt aufgrund obiger Erwägungen höchstens 20 Mol%, vorzugsweise höchstens 10 Mol%, höchstens 5 Mol% oder höchstens 3 Mol%. In einer Ausführungsform ist das Glas frei von Willemit, in einer anderen Ausführungsform enthält das Glas Willemit in einem Anteil von wenigstens 0,1 Mol% oder wenigstens 1 Mol%.

Unter einem Mol Pekovit wird ein Mol $(SrO \cdot B_2O_3 \cdot 2SiO_2)/4$ verstanden. Der Anteil an Pekovit in den erfindungsgemäßen Gläsern beträgt aufgrund obiger Erwägungen höchstens 20 Mol%, vorzugsweise höchstens 10 Mol%, höchstens 8 Mol% oder höchstens 7 Mol%. In einer Ausführungsform ist das Glas frei von Pekovit, in einer anderen Ausführungsform enthält das Glas Pekovit in einem Anteil von wenigstens 0,5 Mol%, wenigstens 1 Mol% oder wenigstens 3 Mol%.

Unter einem Mol Maleevit wird ein Mol $(BaO \cdot B_2O_3 \cdot 2SiO_2)/4$ verstanden. Der Anteil an Maleevit in den erfindungsgemäßen Gläsern beträgt aufgrund obiger Erwägungen höchstens 25 Mol%, vorzugsweise höchstens 20 Mol%, höchstens 15 Mol% oder höchstens 10 Mol%. In einer Ausführungsform ist das Glas frei von Maleevit, in einer anderen Ausführungsform enthält das Glas Maleevit in einer Menge von wenigstens 1 Mol%, wenigstens 3 Mol% oder wenigstens 5 Mol%. In einer besonderen Ausführungsform beträgt der Anteil an Maleevit in einer Menge von wenigstens 12 Mol% oder wenigstens 15 Mol%.

Das Glas kann neben den genannten das Glas konstituierenden Phasen zusätzlich $SiO_2$ (Siliciumdioxid)

und/oder $B_2O_3$ (Dibortrioxid) umfassen.

Der Anteil an $SiO_2$ beträgt erfindungsgemäß 0 bis 65 Mol%. In bevorzugten Ausführungsformen beträgt dieser Anteil wenigstens 1 Mol%, insbesondere wenigstens 5 Mol%, wenigstens 10 Mol%, wenigstens 15 Mol%, wenigstens 25 Mol% oder >30 Mol%. Ein zu großer Anteil an $SiO_2$ erhöht die Verarbeitungstemperaturen und unterdrückt die gewünschten Eigenschaften der wichtigen konstituierenden Phasen Reedmergnerit und Albit. Daher ist der Gehalt dieser Komponente in einer Ausführungsform vorzugsweise auf höchstens 60 Mol%, höchstens 50 Mol%, höchstens 40 Mol%, höchstens 37 Mol% oder höchstens 34 Mol% begrenzt. In einer alternativen Ausführungsform beträgt der Anteil an $SiO_2$ wenigstens 40 Mol% oder wenigstens 50 Mol%.

Der Anteil an $B_2O_3$ beträgt erfindungsgemäß 0 bis 20 Mol%. In bevorzugten Ausführungsformen beträgt dieser Anteil wenigstens 0,1 Mol%, insbesondere wenigstens 0,5 Mol%, wenigstens 1 Mol%, wenigstens 2 Mol% oder wenigstens 3 Mol%. Der Gehalt dieser Komponente ist vorzugsweise auf höchstens 18 Mol%, höchstens 15 Mol%, höchstens 10 Mol%, höchstens 7 Mol% oder höchstens 5 Mol% begrenzt. Der Gehalt an $B_2O_3$ ist vorzugsweise geringer als der Gehalt an $SiO_2$. Insbesondere übersteigt der Gehalt an $SiO_2$ den Gehalt an $B_2O_3$ um einen Faktor von wenigstens 2, 3, 4, 5, 6 oder 7. Es gibt noch einen weiteren Grund, Dibortrioxid als konstituierende Phase in das Glas einzuführen. Dies verschiebt das Bor/Natrium-Verhältnis zu höheren Werten, was die Natrium- und Borverdampfung während Schmelze und Heißformgebung senkt, siehe in C. Pentzel, D. Höhne, Chemische Aspekte bei Verdampfungsvorgängen aus Borosilicatglasschmelzen, Teil III, Sprechsaal 124 (1991), 327-329.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt höchstens 5 Mol-%, um die durch sorgsame Auswahl geeigneter Grundgläser eingestellten Glaseigenschaften nicht zu stören. In besonders bevorzugten Ausführungsformen beträgt der Anteil an Rest in dem Glas höchstens 3 Mol-%, mehr bevorzugt höchstens 2 Mol-% oder höchstens 1 Mol-% oder höchstens 0,5 Mol-%. Der Rest enthält insbesondere Oxide, die nicht in den hierin genannten Grundgläsern enthalten sind. Somit enthält der Rest insbesondere kein $SiO_2$, $B_2O_3$, $Al_2O_3$, ZnO, MgO, CaO, SrO, BaO, $Na_2O$ oder $K_2O$. Erfindungsgemäß werden als Rest optional noch Beigaben weiterer einfacher Oxide von sogenannten "Intermediates", also Oxiden, die zwischen den Netzwerkbildnern wie $SiO_2$ und den Netzwerkwandlern wie $Na_2O$ stehen, eingesetzt (siehe Journal of The American Ceramic Society Vol. 30, Nr. 9 (1947), S. 277 - 281). Diese Oxide bilden zwar allein keine Gläser, können aber im genannten Prozentbereich in das Netzwerk eingebaut werden. Somit kann der Rest insbesondere Oxide wie $TiO_2$ und/oder $ZrO_2$ enthalten. Nach der Theorie von A. Dietzel, Die Kationenfeldstärken und ihre Beziehungen zu Entglasungsvorgängen, zur Verbindungsbildung und zu den Schmelzpunkten von Silicaten, Berichte der Bunsengesellschaft für physikalische Chemie Vol. 48 Nr.1 (1942), 9-23, zählen auch $Nb_2O_5$ und $Ta_2O_5$ zu den "Intermediates", wie man unter Verwendung der Ionenradien nach R. Shannon, Revised Effective Ionic Radii and Systematic Studies of Interatomic Distances in Halides and Chalcogenides, Acta Cryst. (1976) A32, 751-767 berechnen kann.

Wenn es in dieser Beschreibung heißt, die Gläser seien frei von einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 300 ppm (molar), bevorzugt weniger als 100ppm (molar), besonders bevorzugt weniger als 50 ppm (molar) und am meisten bevorzugt weniger als 10 ppm (molar). Die Gläser dieser Erfindung sind insbesondere frei von Lithium, Blei, Arsen, Antimon, Bismut und/oder Cadmium.

Bevorzugte Glaszusammensetzungen

In einer bevorzugten Ausführungsform ist das erfindungsgemäße Glas durch folgende bevorzugte und besonders bevorzugte Anteile konstituierender Phasen an der Grundglaszusammensetzung gekennzeichnet. Die zuvor und nachfolgend ausgeführten bevorzugten Anteilsbereiche und weiteren Merkmale hinsichtlich des erfindungsgemäßen Glases gelten auch für die nachfolgend skizzierte bevorzugte und besonders bevorzugte Ausführungsform:

**Tabelle 8**

| konstituierende Phase | bevorzugt | | mehr bevorzugt | |
|---|---|---|---|---|
| | Min (Mol%) | Max (Mol%) | Min (Mol%) | Max (Mol%) |
| Reedmergnerit | 24 | 70 | 26 | 60 |
| Albit | 15 | 35 | 20 | 32 |

(fortgesetzt)

| konstituierende Phase | bevorzugt | | mehr bevorzugt | |
|---|---|---|---|---|
| | Min (Mol%) | Max (Mol%) | Min (Mol%) | Max (Mol%) |
| Kalium-Reedmergnerit | 0 | 30 | 0 | 20 |
| Danburit | 3 | 14 | 3 | 10 |
| Cordierit | 0 | 10 | 0 | 5 |
| Willemit | 0 | 10 | 0 | 5 |
| Siliciumdioxid | 1 | 50 | 5 | 40 |
| Dibortrioxid | 0,1 | 18 | 0,5 | 15 |
| Pekovit | 0 | 10 | 0 | 5 |
| Maleevit | 0 | 10 | 0 | 5 |
| optional Rest | 0 | 5 | 0 | 5 |

In einer bevorzugten Ausführungsform ist das erfindungsgemäße Glas durch folgende bevorzugte und besonders bevorzugte Anteile konstituierender Phasen an der Grundglaszusammensetzung gekennzeichnet. Die zuvor und nachfolgend ausgeführten bevorzugten Anteilsbereiche und weiteren Merkmale hinsichtlich des erfindungsgemäßen Glases gelten auch für die nachfolgend skizzierte bevorzugte und besonders bevorzugte Ausführungsform:

**Tabelle 9**

| konstituierende Phase | bevorzugt | | mehr bevorzugt | |
|---|---|---|---|---|
| | Min (Mol%) | Max (Mol%) | Min (Mol%) | Max (Mol%) |
| Reedmergnerit | 12 | 36 | 13 | 30 |
| Albit | 2 | 9 | 3 | 8 |
| Kalium-Reedmergnerit | 0 | 20 | 0 | 10 |
| Danburit | 1 | 20 | 2 | 18 |
| Cordierit | 0 | 10 | 0 | 5 |
| Willemit | 0 | 10 | 0 | 5 |
| Siliciumdioxid | 40 | 65 | 50 | 60 |
| Dibortrioxid | 0 | 18 | 0 | 15 |
| Pekovit | 0 | 20 | 0,5 | 10 |
| Maleevit | 0 | 25 | 3 | 25 |
| optional Rest | 0 | 5 | 0 | 5 |

### Oberflächenbeschaffenheit

Die Gläser dieser Erfindung zeichnen sich vorzugsweise durch einen verhältnismäßig kleinen Eigenschaftsgradienten zwischen dem Bulkglas und der Oberfläche eines aus dem Glas hergestellten Glasartikels aus. Ein Glasartikel aus dem hierin beschriebenen Glas ist ebenfalls Teil der vorliegenden Erfindung.

Unter "Oberfläche" wird erfindungsgemäß ein Anteil des Glases verstanden, der der Grenzfläche Glas/Luft nahe ist. Das Glas, das die Oberfläche bildet, wird hier "Oberflächenglas" genannt; das übrige Glas, das weiter im Inneren liegt, wird hier "Bulkglas" genannt. Eine genaue Abgrenzung zwischen Oberfläche und Bulk ist schwierig, daher wird für diese Erfindung definiert, dass das Oberflächenglas in einer Tiefe von etwa 6 nm vorliegt. Folglich werden die Eigenschaften des Oberflächenglases in etwa 6 nm Tiefe ermittelt. Die Eigenschaften des Bulkglases werden rechnerisch ermittelt, da die Glaszusammensetzung in größerer Tiefe durch die Herstellung keine Veränderung erfährt. Bulkglas liegt jedenfalls in 500 nm Tiefe vor. Die Oberfläche kann durch bestimmte Maßnahmen während der Glasherstellung zum Vorteil beeinflusst werden. Die Zusammensetzung des Oberflächenglases in etwa 6 nm Tiefe kann mittels Cs-TOF-SIMS bei 1000 eV gemessen werden.

Es ist bekannt, dass es bei Schmelze und Heißformgebung alkalihaltiger Borosilicatgläser zum Abdampfen von Alkalis und Bor kommen kann. In Anwesenheit von Bor dampfen Alkalis und Bor vorzugsweise gemeinsam als Metaborate ab. Dies ist der Abdampfungsmechanismus für die Alkali- und Boratome, die in den konstituierenden Phasen Reedmergnerit, Kalium-Reedmergnerit und Albit enthalten sind. Trigonales Bor, das also nicht durch Anlagerung eines z.B. von einem Alkali stammenden weiteren Sauerstoffatoms in die tetragonale Koordination übergegangen ist, ist zwar geometrisch und energetisch eng gebunden, was der Abdampfneigung entgegenwirkt, kann aber als Metaborsäure abdampfen, die zusammen mit Wasserdampf aus der umgebenden Atmosphäre gebildet wird. Dies ist der Abdampfungsmechanismus für die Boratome, die in der eigenen konstituierenden Phase $B_2O_3$ vorliegen. Alle Abdampfmechanismen unterliegen einer starken Temperaturabhängigkeit.

Der Verlust bestimmter Glaskomponenten an der Oberfläche des Glases ist damit nicht nur von der Glaszusammensetzung, sondern auch von dem Herstellungsverfahren abhängig. Insbesondere kann über die Einstellung des Wasserdampfpartialdruckes und der Temperatur beim Formen eines Glasartikels der Verlust an freiem $B_2O_3$ eingestellt werden. Es gilt, dass bei höherem Wasserdampfpartialdruck mehr Dibortrioxid in Form von Metaborsäure verdampft.

Aus DE 10 2014 101 756 B4 ist ein Verfahren bekannt, das eine Erhöhung der hydrolytischen Beständigkeit durch Beaufschlagen mit Wasserdampf beinhaltet. Die untersuchten Gläser haben typischerweise einen erheblichen Anteil an Dibortrioxid als konstituierender Phase, so dass anzunehmen ist, dass die beobachtete Erhöhung der hydrolytischen Beständigkeit durch Beaufschlagung mit Wasserdampf auf die Überführung von Dibortrioxid in Borsäure und deren Abdampfen zurückzuführen ist.

Jedoch sollen die Temperaturführung im Heißformgebungsbereich und die Beaufschlagung mit Wasserdampf nicht dazu führen, dass sich die Zusammensetzung der Oberfläche im Vergleich zum Glasinneren zu stark ändert, da dies in einem unerwünschten Unterschied zwischen den Ausdehnungskoeffizienten an der Oberfläche und im Bulkglas resultiert. Letzterer kann zu unerwünschten Spannungen führen.

Als Leitelement für die Zusammensetzungsänderung an der Oberfläche wird Bor definiert. Es wird daher eine Grenze dadurch definiert, dass der mit Cs-ToF-SIMS bei 1000 eV gemessene Borgehalt im Oberflächenglas mindestens 50%, vorzugsweise mindestens 60%, besonders bevorzugt mindestens 80% des in der Ausführung der Erfindung vorgesehenen und im Bulkglas auch vorhandenen Gehaltes an Bor erreicht. Gegebenenfalls ist abweichend von DE 10 2014 101 756 B4 nicht mit einem bei 90°C wasserdampfgesättigten Gas, sondern einem Gas mit niedrigerem Wasserdampfgehalt zu beaufschlagen, um den Borverlust in den gewünschten Grenzen zu halten. Ein gewisser Borverlust erhöht die hydrolytische Beständigkeit, ein zu hoher Borverlust und damit hoher Unterschied der Borgehalte zwischen Oberflächen- und Bulkglas führt zu Spannungen. Vorzugsweise ist der Borgehalt in dem Oberflächenglas im Verhältnis zum Bulkglas um wenigstens 0,1 Mol%, insbesondere wenigstens 0,5 Mol%, oder wenigstens 1 Mol%, insbesondere wenigstens 2 Mol% oder wenigstens 5 Mol% verringert. Die Werte können insbesondere unmittelbar nach der Herstellung des Glases gemessen werden.

### Herstellung

Erfindungsgemäß ist auch ein Verfahren zur Herstellung eines Glases dieser Erfindung, mit den Schritten:

- Schmelzen der Glasrohstoffe,

- optional Formen eines Glasartikels, insbesondere eines Glasrohres, aus der Glasschmelze

- Abkühlen des Glases.

Das Formen des Glases kann ein Ziehverfahren umfassen, insbesondere ein Rohrzugverfahren. Das Abkühlen kann ein aktives Abkühlen unter Einsatz eines Kühlmittels, z.B. eines Kühlfluids, oder durch passives Abkühlen-lassen durchgeführt werden.

Während des Schmelzens und/oder des Formens kann die umgebende Atmosphäre, insbesondere deren Sättigungsgrad mit Wasserdampf, eingestellt werden. Insbesondere umfasst der Schritt des Schmelzens und/oder Formens den Schritt des Beaufschlagens des Glases mit einem wasserdampfhaltigen Gas. Durch das Einstellen der Wasserdampfsättigung der Atmosphäre kann der Verlust von Dibortrioxid auf erfindungsgemäße Werte eingestellt werden. Bevorzugt sind Werte von weniger als 100% relativer Feuchte bei 90 °C, insbesondere weniger als 80% relativer Feuchte bei 90 °C, bevorzugt weniger als 70% relativer Feuchte bei 90 °C und besonders bevorzugt weniger als 60% relativer Feuchte bei 90 °C. Über die geeignete Wahl der relativen Feuchte und der Temperatur kann der Fachmann die weiter oben als gewünscht beschriebenen Boroxidgehalte in dem Oberflächenglas einstellen. Die Atmosphäre kann beispielsweise in Form eines Kühlgases während des Formens in den Prozessraum eingeblasen werden, insbesondere in den Hohlraum eines gezogenen Glasrohres.

### Verwendungen und Glasartikel

Erfindungsgemäß sind neben dem Glas auch aus dem Glas geformte Glasartikel wie Glasrohre und Behälter (wie Flaschen, Ampullen, Karpulen, Spritzen). Bevorzugt sind die Glasartikel zur Verwendung als Packmittel für pharmazeutische Erzeugnisse, insbesondere als Behälter für Flüssigkeiten, bestimmt. In Rahmen dieser Verwendungen sind die hydrolytische und die Laugenbeständigkeit von besonderem Interesse.

### Beispiele

### Umrechnung von der Zusammensetzung aus konstituierenden Phasen in Zusammensetzung aus einfachen Oxiden und umgekehrt

Da es neben Eigenschaften, die sich gut anhand der Zusammensetzung aus konstituierenden Phasen beschreiben lassen, auch solche gibt, für die die konventionelle Beschreibung und Berechnung anhand der Zusammensetzung aus einfachen Oxiden erfolgen muss, geben wir zunächst eine Umrechnungsmatrix für die gegenseitige Umrechnung beider Zusammensetzungsangaben an.

Die Zusammensetzung in konstituierenden Phasen wird zum Zweck der Umrechnung in der folgenden normierten Form angegeben:

**Tabelle 10**

| konstituierende Phase | Formel (auf ein einfaches Oxid normiert) |
|---|---|
| Reedmergnerit | $(Na_2O \cdot B_2O_3 \cdot 6SiO_2)/8$ |
| Albit | $(Na_2O \cdot Al_2O_3 \cdot 6SiO_2)/8$ |
| Kalium-Reedmergnerit | $(K_2O \cdot B_2O_3 \cdot 6SiO_2)/8$ |
| Danburit | $(CaO \cdot B_2O_3 \cdot 2SiO_2)/4$ |
| Cordierit | $(2MgO \cdot 2Al_2O_3 \cdot 5SiO_2)/9$ |
| Willemit | $(2ZnO \cdot SiO_2)/3$ |
| Siliciumdioxid | $SiO_2$ |
| Dibortrioxid | $B_2O_3$ |
| Pekovit | $(SrO \cdot B_2O_3 \cdot 2SiO_2)/4$ |
| Maleevit | $(BaO \cdot B_2O_3 \cdot 2SiO_2)/4$ |

Die Umrechnung dieser Zusammensetzungen in eine Zusammensetzungsangabe in Mol-% bezüglich der folgenden einfachen Oxide ...

| # | Oxid |
|---|---|
| 1. | $SiO_2$ |
| 2. | $B_2O_3$ |
| 3. | $Al_2O_3$ |
| 4. | $ZnO$ |
| 5. | $MgO$ |
| 6. | $CaO$ |
| 7. | $SrO$ |
| 8. | $BaO$ |
| 9. | $Na_2O$ |
| 10. | $K_2O$ |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Matrix**

| | | | | | | | | | | | |
|---|---|---|---|---|---|---|---|---|---|---|---|
| 6/8 | 6/8 | 6/8 | 2/4 | 5/9 | 1/3 | 1 | 0 | 2/4 | 2/4 | | $(Na_2O \cdot B_2O_3 \cdot 6SiO_2)/8$ |
| 1/8 | 0 | 1/8 | 1/4 | 0 | 0 | 0 | 1 | 1/4 | 1/4 | | $(Na_2O \cdot Al_2O_3 \cdot 6SiO_2)/8$ |
| 0 | 1/8 | 0 | 0 | 2/9 | 0 | 0 | 0 | 0 | 0 | | $(K_2O \cdot B_2O_3 \cdot 6SiO_2)/8$ |
| 0 | 0 | 0 | 0 | 0 | 2/3 | 0 | 0 | 0 | 0 | | $(CaO \cdot B_2O_3 \cdot 2SiO_2)/4$ |
| 0 | 0 | 0 | 0 | 2/9 | 0 | 0 | 0 | 0 | 0 | x | $(2MgO \cdot 2Al_2O_3 \cdot 5SiO_2)/9$ |
| 0 | 0 | 0 | 1/4 | 0 | 0 | 0 | 0 | 0 | 0 | | $(2ZnO \cdot SiO_2)/3$ |
| 0 | 0 | 0 | 0 | 0 | 0 | 0 | 0 | 1/4 | 0 | | $SiO_2$ |
| 0 | 0 | 0 | 0 | 0 | 0 | 0 | 0 | 0 | 1/4 | | $B_2O_3$ |
| 1/8 | 1/8 | 0 | 0 | 0 | 0 | 0 | 0 | 0 | 0 | | $(SrO \cdot B_2O_3 \cdot 2SiO_2)/4$ |
| 0 | 0 | 1/8 | 0 | 0 | 0 | 0 | 0 | 0 | 0 | | $(BaO \cdot B_2O_3 \cdot 2SiO_2/4$ |

Als Ergebnis der Multiplikation des Spaltenvektors an die Matrix erhält man die Zusammensetzung des Glases in Molprozenten.

Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

**Beispiel 1**

Das erste Beispiel ist ein Glas, in dem im Hinblick auf einen möglichst geringen Abtrag von Bor und Borverbindungen im Heißformgebungsbereich ein hoher Anteil von Dibortrioxid (8%) enthalten ist. Es hat die Zusammensetzung:

**Tabelle 11**

| konstituierende Phase | Anteil / Mol% |
|---|---|
| Reedmergnerit | 37 |
| Albit | 8 |
| Kalium-Reedmergnerit | 16 |
| Danburit | 8 |
| Cordierit | 0 |
| Willemit | 0 |
| Siliziumdioxid | 31 |
| Dibortrioxid | 8 |
| Pekovit | 0 |
| Maleevit | 0 |

Dieses Glas hat die folgenden weiteren Eigenschaften:

1. Durch Lösen des Gleichungssystem (1) kommt man auf einen pH = 8,76, wenn 50 $\mu$mol in 1 Liter Neutralwasser gelöst werden.

2. Die nach (3) berechnete Zahl der Winkelfreiheitsgrade pro Atom beträgt damit 0,35, was wiederum nach (2) auf eine Abtragrate von 135 mg/(dm$^2$3h) führt.

3. Die nach (4) berechnete mittlere Potentialtopftiefe beträgt 1612 kJ/mol, was wiederum nach (5) auf eine thermische Ausdehnung von 4,94 ppm/K führt.

Außerdem wird die Wasserdampfüberleitung bei Beispiel 1 in der Herstellung so eingestellt, dass der Gesamtborgehalt an der Oberfläche minimal 80% des Borgehaltes im Glasinneren beträgt.

**Beispiel 2**

Das zweite Beispiel ist ein Glas, in dem wiederum im Hinblick auf einen möglichst geringen Abtrag von Bor und Borverbindungen im Heißformgebungsbereich ein hoher Anteil von Dibortrioxid (6%) enthalten ist. Es hat die Zusammensetzung:

**Tabelle 12**

| konstituierende Phase | Anteil / Mol% |
|---|---|
| Reedmergnerit | 42 |
| Albit | 12 |
| Kalium-Reedmergnerit | 9 |
| Danburit | 0 |
| Cordierit | 0 |
| Willemit | 0 |
| Siliziumdioxid | 31 |
| Dibortrioxid | 6 |
| Pekovit | 0 |
| Maleevit | 0 |

Dieses Glas hat die folgenden Eigenschaften:

1. Durch Lösen des Gleichungssystem (1) kommt man auf einen pH = 8,79, wenn 50 $\mu$mol in 1 Liter Neutralwasser gelöst werden.

2. Die nach (3) berechnete Zahl der Winkelfreiheitsgrade pro Atom beträgt damit 0,31, was wiederum nach (2) auf eine Abtragrate von 117 mg/(dm$^2$3h) führt.

3. Die nach (4) berechnete mittlere Potentialtopftiefe beträgt 1612 kJ/mol, was wiederum nach (5) auf eine thermische Ausdehnung von 4,94 ppm/K führt.

Außerdem wird die Wasserdampfüberleitung bei Beispiel 2 in der Herstellung so eingestellt, dass der Gesamtborgehalt an der Oberfläche minimal 80% des Borgehaltes im Glasinneren beträgt.

**Beispiel 3**

Auch das dritte Beispiel ist ein Glas, in dem im Hinblick auf einen geringen Abtrag von Bor und Borverbindungen im Heißformgebungsbereich ein erheblicher Anteil von Dibortrioxid (4%) enthalten ist. Es hat die Zusammensetzung:

**Tabelle 13**

| konstituierende Phase | Anteil / mol% |
|---|---|
| Reedmergnerit | 40 |
| Albit | 8 |

(fortgesetzt)

| konstituierende Phase | Anteil / mol% |
|---|---|
| Kalium-Reedmergnerit | 16 |
| Danburit | 0 |
| Cordierit | 0 |
| Willemit | 0 |
| Siliziumdioxid | 32 |
| Dibortrioxid | 4 |
| Pekovit | 0 |
| Maleevit | 0 |

Dieses Glas hat die folgenden Eigenschaften:

1. Durch Lösen des Gleichungssystem (1) kommt man auf einen pH = 8,81 , wenn 50 $\mu$mol in 1 Liter Neutralwasser gelöst werden.

2. Die nach (3) berechnete Zahl der Winkelfreiheitsgrade pro Atom beträgt damit 0,261, was wiederum nach (2) auf eine Abtragrate von knapp 100 mg/(dm$^2$3h) führt.

3. Die nach (4) berechnete mittlere Potentialtopftiefe beträgt 1614 kJ/mol, was wiederum nach (5) auf eine thermische Ausdehnung von 4,90 ppm/K führt.

Außerdem wird die Wasserdampfüberleitung bei Beispiel 3 in der Herstellung so eingestellt, dass der Gesamtborgehalt an der Oberfläche minimal 80% des Borgehaltes im Glasinneren beträgt.

**Beispiel 4**

Das vierte Beispiel ist ein Glas, in dem die thermische Ausdehnung etwas verringert worden ist, um eine errechnete Abtragrate von ca. 95 mg/(dm$^2$3h) zu erreichen. Im Hinblick auf einen geringen Abtrag von Bor und Borverbindungen im Heißformgebungsbereich ist ein Anteil von 4% Dibortrioxid enthalten. Es hat die Zusammensetzung:

**Tabelle 14**

| konstituierende Phase | Anteil / Mol% |
|---|---|
| Reedmergnerit | 36 |
| Albit | 10 |
| Kalium-Reedmergnerit | 10 |
| Danburit | 0 |
| Cordierit | 0 |
| Willemit | 0 |
| Siliziumdioxid | 40 |
| Dibortrioxid | 4 |
| Pekovit | 0 |
| Maleevit | 0 |

Dieses Glas hat die folgenden Eigenschaften:

1. Durch Lösen des Gleichungssystem (1) kommt man auf einen pH = 8,76, wenn 50 $\mu$mol in 1 Liter Neutralwasser gelöst werden.

2. Die nach (3) berechnete Zahl der Winkelfreiheitsgrade pro Atom beträgt damit 0,245, was wiederum nach (2) auf eine Abtragrate von 95,3 mg/(dm$^2$h) beim Test gemäß ISO 695 führt.

3. Die nach (4) berechnete mittlere Potentialtopftiefe beträgt 1639 kJ/mol, was wiederum nach (5) auf eine thermische Ausdehnung von 4,41 ppm/K führt.

**Beispiel 5**

Das fünfte Beispiel ist ein Glas, das eine niedrige errechnete Abtragrate unter 105 mg/(dm$^2$h) hat. Im Hinblick auf einen geringen Abtrag von Bor und Borverbindungen im Heißformgebungsbereich ist ein Anteil von 4% Dibortrioxid enthalten. Es hat die Zusammensetzung:

**Tabelle 15**

| konstituierende Phase | Anteil / mol% |
|---|---|
| Reedmergnerit | 36 |
| Albit | 6 |
| Kalium-Reedmergnerit | 6 |
| Danburit | 0 |
| Cordierit | 0 |
| Willemit | 0 |
| Siliziumdioxid | 48 |
| Dibortrioxid | 4 |
| Pekovit | 0 |
| Maleevit | 0 |

Dieses Glas hat die folgenden Eigenschaften:

1. Durch Lösen des Gleichungssystem (1) kommt man auf einen pH = 8,69 , wenn 50 μmol in 1 Liter Neutralwasser gelöst werden.

2. Die nach (3) berechnete Zahl der Winkelfreiheitsgrade pro Atom beträgt damit 0,224, was wiederum nach (2) auf eine Abtragrate von 89,7 mg/(dm$^2$h) führt.

3. Die nach (4) berechnete mittlere Potentialtopftiefe beträgt 1665 kJ/mol, was wiederum nach (5) auf eine thermische Ausdehnung von 3,9 ppm/K führt.

Außerdem wird die Wasserdampfüberleitung bei Beispiel 5 in der Herstellung so eingestellt, dass der Gesamtborgehalt an der Oberfläche minimal 80% des Borgehaltes im Glasinneren beträgt.

**Beispiel 6**

Das sechste Beispiel ist ein Glas, das eine im Vergleich zu Beispiel 5 noch niedrigere errechnete Abtragrate von ca. 80 mg/(dm$^2$h) und einen niedrigen pH hat. Im Hinblick auf einen geringen Abtrag von Bor und Borverbindungen im Heißformgebungsbereich ist ein Anteil von 2% Dibortrioxid enthalten. Es hat die Zusammensetzung:

**Tabelle 16**

| konstituierende Phase | Anteil / mol% |
|---|---|
| Reedmergnerit | 34 |
| Albit | 8 |

(fortgesetzt)

| konstituierende Phase | Anteil / mol% |
| --- | --- |
| Kalium-Reedmergnerit | 8 |
| Danburit | 0 |
| Cordierit | 0 |
| Willemit | 0 |
| Siliziumdioxid | 48 |
| Dibortrioxid | 2 |
| Pekovit | 0 |
| Maleevit | 0 |

Dieses Glas hat die folgenden Eigenschaften:

1. Durch Lösen des Gleichungssystem (1) kommt man auf einen pH = 8,73, wenn 50 $\mu$mol in 1 Liter Neutralwasser gelöst werden.

2. Die nach (3) berechnete Zahl der Winkelfreiheitsgrade pro Atom beträgt damit 0,1807, was wiederum nach (2) auf eine Abtragrate von 80,1 mg/(dm²3h) führt.

3. Die nach (4) berechnete mittlere Potentialtopftiefe beträgt 1665 kJ/mol, was wiederum nach (5) auf eine thermische Ausdehnung von 3,91 ppm/K führt.

**Beispiel 7**

Das siebte Beispiel ist ein Glas, das eine im Vergleich zu Beispiel 6 noch niedrigere errechnete Abtragrate unter 75 mg/(dm²3h) hat. Es ist kein Anteil von Dibortrioxid enthalten. Die Zusammensetzung ist:

**Tabelle 17**

| konstituierende Phase | Anteil / mol% |
| --- | --- |
| Reedmergnerit | 37 |
| Albit | 4 |
| Kalium-Reedmergnerit | 9 |
| Danburit | 0 |
| Cordierit | 0 |
| Willemit | 1 |
| Siliziumdioxid | 49 |
| Dibortrioxid | 0 |
| Pekovit | 0 |
| Maleevit | 0 |

Dieses Glas hat die folgenden Eigenschaften:

1. Durch Lösen des Gleichungssystem (1) kommt man auf einen pH = 8,73, wenn 50 $\mu$mol in 1 Liter Neutralwasser gelöst werden.

2. Die nach (3) berechnete Zahl der Winkelfreiheitsgrade pro Atom beträgt damit 0,131, was wiederum nach (2) auf eine Abtragrate von 72 mg/(dm²3h) führt.

3. Die nach (4) berechnete mittlere Potentialtopftiefe beträgt 1665 kJ/mol, was wiederum nach (5) auf eine thermische Ausdehnung von 3,9 ppm/K führt.

Außerdem wird die Wasserdampfüberleitung bei Beispiel 7 in der Herstellung so eingestellt, dass der Gesamtborgehalt an der Oberfläche minimal 80% des Borgehaltes im Glasinneren beträgt.

**Beispiel 8**

Das achte Beispiel ist ein Glas, das eine im Vergleich zu Beispiel 6 eine höhere errechnete Abtragrate von ca. 85 mg/(dm$^2$3h) hat, dafür aber auch eine höhere thermische Ausdehnung. Die Zusammensetzung ist:

**Tabelle 18**

| konstituierende Phase | Anteil / mol% |
| --- | --- |
| Reedmergnerit | 27 |
| Albit | 9 |
| Kalium-Reedmergnerit | 12 |
| Danburit | 0 |
| Cordierit | 0 |
| Willemit | 4 |
| Siliziumdioxid | 44 |
| Dibortrioxid | 2 |
| Pekovit | 2 |
| Maleevit | 0 |

Dieses Glas hat die folgenden Eigenschaften:

1. Durch Lösen des Gleichungssystem (1) kommt man auf einen pH = 8,87, wenn 50 $\mu$mol in 1 Liter Neutralwasser gelöst werden.

2. Die nach (3) berechnete Zahl der Winkelfreiheitsgrade pro Atom beträgt damit 2,07, was wiederum nach (2) auf eine Abtragrate von 85,5 mg/(dm$^2$3h) führt.

3. Die nach (4) berechnete mittlere Potentialtopftiefe beträgt 1639 kJ/mol, was wiederum nach (5) auf eine thermische Ausdehnung von 4,4 ppm/K führt.

**Beispiel 9**

Das neunte Beispiel ist ein Glas, das im Vergleich zu Beispiel 8 eine noch einmal höhere errechnete Abtragrate von ca. 90 mg/(dm$^2$3h) mit einem noch einmal höheren Ausdehnungskoeffizienten von ca. 5ppm/K kombiniert. Die Zusammensetzung ist:

**Tabelle 19**

| konstituierende Phase | Anteil / mol% |
| --- | --- |
| Reedmergnerit | 32 |
| Albit | 10 |
| Kalium-Reedmergnerit | 10 |
| Danburit | 1 |
| Cordierit | 0 |
| Willemit | 6 |

(fortgesetzt)

| konstituierende Phase | Anteil / mol% |
|---|---|
| Siliziumdioxid | 38 |
| Dibortrioxid | 2 |
| Pekovit | 1 |
| Maleevit | 0 |

Dieses Glas hat die folgenden Eigenschaften:

1. Durch Lösen des Gleichungssystem (1) kommt man auf einen pH = 8,93, wenn 50 $\mu$mol in 1 Liter Neutralwasser gelöst werden.

2. Die nach (3) berechnete Zahl der Winkelfreiheitsgrade pro Atom beträgt damit 0,228, was wiederum nach (2) auf eine Abtragrate von 90,7 mg/(dm$^2$3h) führt.

3. Die nach (4) berechnete mittlere Potentialtopftiefe beträgt 1614 kJ/mol, was wiederum nach (5) auf eine thermische Ausdehnung von 4,91 ppm/K führt.

**Beispiel** 10

Das zehnte Beispiel ist ein Glas, das eine niedrige errechnete Abtragrate unter 100 mg/(dm$^2$3h) mit einem Ausdehnungskoeffizienten von ca. 5,5 ppm/K kombiniert und einen Dibortrioxidgehalt von 2 Mol% hat. Die Zusammensetzung ist:

**Tabelle 20**

| konstituierende Phase | Anteil / mol% |
|---|---|
| Reedmergnerit | 38 |
| Albit | 6 |
| Kalium-Reedmergnerit | 12 |
| Danburit | 4 |
| Cordierit | 0 |
| Willemit | 6 |
| Siliziumdioxid | 29 |
| Dibortrioxid | 2 |
| Pekovit | 3 |
| Maleevit | 0 |

Dieses Glas hat die folgenden Eigenschaften:

1. Durch Lösen des Gleichungssystem (1) kommt man auf einen pH = 8,99, wenn 50 $\mu$mol in 1 Liter Neutralwasser gelöst werden.

2. Die nach (3) berechnete Zahl der Winkelfreiheitsgrade pro Atom beträgt damit 0,249, was wiederum nach (2) auf eine Abtragrate von 96,6 mg/(dm$^2$3h) führt.

3. Die nach (4) berechnete mittlere Potentialtopftiefe beträgt 1589 kJ/mol, was wiederum nach (5) auf eine thermische Ausdehnung von 5,4 ppm/K führt.

Außerdem wird die Wasserdampfüberleitung bei Beispiel 10 in der Herstellung so eingestellt, dass der Gesamtborgehalt an der Oberfläche minimal 80% des Borgehaltes im Glasinneren beträgt.

**Beispiel** 11

Das elfte Beispiel ist ein Glas, das eine mit Beispiel 10 vergleichbare errechnete Abtragrate nach (2) hat, aber einen höheren thermischen Ausdehnungskoeffizienten. Die Zusammensetzung ist:

Tabelle 21

| konstituierende Phase | Anteil / mol% |
| --- | --- |
| Reedmergnerit | 26 |
| Albit | 4 |
| Kalium-Reedmergnerit | 47 |
| Danburit | 0 |
| Cordierit | 0 |
| Willemit | 2 |
| Siliziumdioxid | 19 |
| Dibortrioxid | 2 |
| Pekovit | 0 |
| Maleevit | 0 |

Dieses Glas hat die folgenden Eigenschaften:

1. Durch Lösen des Gleichungssystem (1) kommt man auf einen pH = 8,94, wenn 50 $\mu$mol in 1 Liter Neutralwasser gelöst werden.

2. Die nach (3) berechnete Zahl der Winkelfreiheitsgrade pro Atom beträgt damit 0,250, was wiederum nach (2) auf eine Abtragsrate von 96,7 mg/(dm$^2$3h) führt.

3. Die nach (4) berechnete mittlere Potentialtopftiefe beträgt 1565 kJ/mol, was wiederum nach (5) auf eine thermische Ausdehnung von 5,91 ppm/K führt.

Außerdem wird die Wasserdampfüberleitung bei Beispiel 11 in der Herstellung so eingestellt, dass der Gesamtborgehalt an der Oberfläche minimal 80% des Borgehaltes im Glasinneren beträgt.

**Beispiel** 12

Beispiel 12 existiert auch als Versuchsschmelze, anhand derer die hier vorgestellten theoretischen Überlegungen verifiziert worden sind. Die Zusammensetzung ist:

**Tabelle 22**

| konstituierende Phase | Anteil / Mol% |
| --- | --- |
| Reedmergnerit | 32,2 |
| Albit | 24,7 |
| Kalium-Reedmergnerit | 0 |
| Danburit | 6,7 |
| Cordierit | 0 |
| Willemit | 0 |
| Siliziumdioxid | 32,6 |

(fortgesetzt)

| konstituierende Phase | Anteil / Mol% |
|---|---|
| Dibortrioxid | 3,8 |
| Pekovit | 0 |
| Maleevit | 0 |

Dieses Glas hat die folgenden Eigenschaften:

1. Durch Lösen des Gleichungssystem (1) kommt man auf einen pH = 8,86 , wenn 50 $\mu$mol in 1 Liter Neutralwasser gelöst werden.

2. Die nach (3) berechnete Zahl der Winkelfreiheitsgrade pro Atom beträgt damit 0,275, was wiederum nach (2) auf eine Abtragrate von 104 mg/(dm$^2$3h) führt.

3. Die nach (4) berechnete mittlere Potentialtopftiefe beträgt 1620 kJ/mol, was wiederum nach (5) auf eine thermische Ausdehnung von 4,8 ppm/K führt.

**Beispiel** 13

Beispiel 13 entsteht aus Beispiel 12 durch Umlegen von je zwei Prozent Siliziumdioxid und Dibortrioxid auf Danburit. Ziel ist, die Laugenbeständigkeit zu senken, ohne dass der pH auf über 9 oder der Ausdehnungskoeffizient auf über 6 ppm/K steigt.

**Tabelle 23**

| konstituierende Phase | Anteil / Mol% |
|---|---|
| Reedmergnerit | 32,2 |
| Albit | 24,7 |
| Kalium-Reedmergnerit | 0 |
| Danburit | 10,7 |
| Cordierit | 0 |
| Willemit | 0 |
| Siliziumdioxid | 30,6 |
| Dibortrioxid | 1,8 |
| Pekovit | 0 |
| Maleevit | 0 |

Dieses Glas hat die folgenden Eigenschaften:

1. Durch Lösen des Gleichungssystem (1) kommt man auf einen pH = 8,92 , wenn 50 $\mu$mol in 1 Liter Neutralwasser gelöst werden.

2. Die nach (3) berechnete Zahl der Winkelfreiheitsgrade pro Atom beträgt damit 0,239, was wiederum nach (2) auf eine Abtragsrate von 93,5 mg/(dm$^2$3h) beim Test gemäß ISO 695 führt.

3. Die nach (4) berechnete mittlere Potentialtopftiefe beträgt 1616 kJ/mol, was wiederum nach (5) auf eine thermische Ausdehnung von 4,8 ppm/K führt.

Die nach ISO 695 an entsprechenden Versuchsschmelzen gemessenen Abtragraten betragen 99 mg/(dm$^2$3h) bei der Versuchsschmelze zu Beispiel 12 und 93 mg/(dm$^2$3h) bei der Versuchsschmelze zu Beispiel 13, was innerhalb der Messfehler zu den Rechenwerten passt.

**Patentansprüche**

1. Glas mit einer Zusammensetzung, die durch die folgenden das Glas konstituierenden Phasen gekennzeichnet ist:

| konstituierende Phase | Min (Mol%) | Max (Mol%) |
|---|---|---|
| Reedmergnerit | 10 | 80 |
| Albit | 1 | 40 |
| Kalium-Reedmergnerit | 0 | 60 |
| Danburit | 0 | 30 |
| Cordierit | 0 | 20 |
| Willemit | 0 | 20 |
| Siliciumdioxid | 0 | 65 |
| Dibortrioxid | 0 | 20 |
| Pekovit | 0 | 20 |
| Maleevit | 0 | 25 |

wobei der Anteil weiterer Bestandteile am Glas höchstens 5 Mol-% beträgt, wobei die Anzahl der Winkelfreiheitsgrade pro Atom im Bulk nach Formel (3)

$$f = \frac{\sum_{i=1}^{n} c_i \cdot z_i \cdot f_i}{\sum_{i=1}^{n} c_i \cdot z_i}$$

weniger als 0,25 beträgt und wobei das Glas eine nach Formel (4)

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}}$$

berechnete mittlere Potentialtopftiefe von 1515 kJ/mol bis 1634 kJ/mol aufweist.

2. Glas nach Anspruch 1 mit einer Zusammensetzung von Grundgläsern, die durch die folgenden das Glas konstituierenden Phasen gekennzeichnet ist, wobei die Summe der Anteile von Reedmergnerit, Kalium-Reedmergnerit und Albit wenigstens 50 Mol% beträgt:

| konstituierende Phase | Min (Mol%) | Max (Mol%) |
|---|---|---|
| Reedmergnerit | 20 | 50 |
| Albit | 15 | 40 |
| Kalium-Reedmergnerit | 0 | 20 |
| Danburit | 0 | 15 |
| Cordierit | 0 | 15 |
| Willemit | 0 | 15 |
| Siliciumdioxid | 25 | 50 |
| Dibortrioxid | 1 | 10 |
| Pekovit | 0 | 10 |
| Maleevit | 0 | 10 |

**3.** Glas nach Anspruch 1 mit einer Zusammensetzung von Grundgläsern, die durch die folgenden das Glas konstituierenden Phasen gekennzeichnet ist:

| konstituierende Phase | Min (Mol%) | Max (Mol%) |
|---|---|---|
| Reedmergnerit | 9 | 50 |
| Albit | 1 | 15 |
| Kalium-Reedmergnerit | 0 | 20 |
| Danburit | 0 | 30 |
| Cordierit | 0 | 20 |

| konstituierende Phase | Min (Mol%) | Max (Mol%) |
|---|---|---|
| Willemit | 0 | 20 |
| Siliciumdioxid | 25 | 65 |
| Dibortrioxid | 0 | 10 |
| Pekovit | 0 | 20 |
| Maleevit | 0 | 25 |

**4.** Glas nach einem der vorhergehenden Ansprüche, wobei der Anteil an Siliciumdioxid höchstens 50 Mol% oder höchstens 40 Mol% beträgt.

**5.** Glas nach wenigstens einem der vorhergehenden Ansprüche, wobei der Anteil an Reedmergnerit in dem Glas größer ist als der Anteil an Albit.

**6.** Glas nach wenigstens einem der vorhergehenden Ansprüche, wobei der Anteil an Dibortrioxid höchstens 15 Mol%, höchstens 10 Mol% oder höchstens 7 Mol% beträgt.

**7.** Glas nach wenigstens einem der vorhergehenden Ansprüche mit einer Anzahl von Winkelfreiheitsgraden nach Formel (3)

$$f = \frac{\sum_{i=1}^{n} c_i \cdot z_i \cdot f_i}{\sum_{i=1}^{n} c_i \cdot z_i}$$

von bis zu 0,244, insbesondere weniger als 0,23 oder weniger als 0,22, bevorzugt weniger als 0,21.

**8.** Glas nach wenigstens einem der vorhergehenden Ansprüche, mit einer nach Formel (5)

$$CTE = \left( \frac{51815\left(\frac{kJ}{Mol}\right)}{\overline{E_{pot}}} - 27{,}205 \right) ppm/K$$

berechneten thermischen Ausdehnung von 3 ppm/K bis 7 ppm/K, insbesondere 4,5 ppm/K bis 5,5 ppm/K.

**9.** Glas nach wenigstens einem der vorhergehenden Ansprüche, wobei sich bei Auflösung von 50 $\mu$mol Glas in Neutralwasser ein pH-Wert von <8,99, insbesondere <8,79, ergibt.

**10.** Glas nach wenigstens einem der vorhergehenden Ansprüche, wobei der Anteil an Reedmergnerit in dem Glas größer ist als der Anteil an Kalium-Reedmergnerit.

**11.** Glas nach wenigstens einem der vorhergehenden Ansprüche, wobei das Glas nach Formel (2)

$$r = c \cdot \left(6{,}8 + (1 + f)^8\right)$$

eine Abtragrate von maximal 135 mg/(dm$^2$3h), insbesondere maximal 125 mg/(dm$^2$3h), aufweist.

**12.** Glas nach wenigstens einem der vorhergehenden Ansprüche, wobei der Gesamtborgehalt in dem Oberflächenglas wenigstens 60%, insbesondere wenigstens 80% des Borgehalts im Bulkglas entspricht und/oder wobei der Borgehalt in dem Oberflächenglas im Verhältnis zum Bulkglas um wenigstens 0,1 Mol%, insbesondere wenigstens 0,5 Mol%, oder wenigstens 1 Mol% verringert ist, wobei das Oberflächenglas in einer Tiefe von etwa 6 nm vorliegt.

**13.** Verfahren zur Herstellung eines Glases nach wenigstens einem der vorhergehenden Ansprüche, mit den Schritten

- Schmelzen der Glasrohstoffe,
- optional Formen eines Glasartikels, insbesondere eines Glasrohres, aus der Glasschmelze
- Abkühlen des Glases.

**14.** Verfahren nach Anspruch 13, mit dem weiteren Schritt

- Beaufschlagen des Glases mit einem wasserdampfhaltigen Gas während des Formens und/oder des Schmelzens.

**15.** Verwendung eines Glases nach einem der Ansprüche 1 bis 12 für Behälter und Verpackungen, insbesondere für pharmazeutische Packmittel.

**Claims**

**1.** A glass having a composition which is **characterized by** the following phases constituting the glass:

| constituting phase | min (% by mol) | max (% by mol) |
|---|---|---|
| reedmergnerite | 10 | 80 |
| albite | 1 | 40 |
| potassium reedmergnerite | 0 | 60 |
| danburite | 0 | 30 |
| cordierite | 0 | 20 |
| willemite | 0 | 20 |
| silicon dioxide | 0 | 65 |
| diboron trioxide | 0 | 20 |
| pekovite | 0 | 20 |
| maleevite | 0 | 25 |

wherein the proportion of additional constituents of the glass is at most 5 % by mol, wherein the number of the freedom degrees of angles per atom in the bulk according to formula (3)

$$f = \frac{\sum_{i=1}^{n} c_i \cdot z_i \cdot f_i}{\sum_{i=1}^{n} c_i \cdot z_i}$$

is lower than 0.25 and wherein the glass has a mean depth of the potential well calculated according to formula (4)

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}}$$

of 1515 kJ/mol to 1634 kJ/mol.

2. The glass according to claim 1 having a composition of base glasses which is **characterized by** the following phases constituting the glass, wherein the sum of the proportions of reedmergnerite, potassium reedmergnerite and albite is at least 50 % by mol:

| constituting phase | min (% by mol) | max (% by mol) |
| --- | --- | --- |
| reedmergnerite | 20 | 50 |
| albite | 15 | 40 |
| potassium reedmergnerite | 0 | 20 |
| danburite | 0 | 15 |
| cordierite | 0 | 15 |
| willemite | 0 | 15 |
| silicon dioxide | 25 | 50 |
| diboron trioxide | 1 | 10 |
| pekovite | 0 | 10 |
| maleevite | 0 | 10 |

3. The glass according to claim 1 having a composition of base glasses which is **characterized by** the following phases constituting the glass:

| constituting phase | min (% by mol) | max (% by mol) |
| --- | --- | --- |
| reedmergnerite | 9 | 50 |
| albite | 1 | 15 |
| potassium reedmergnerite | 0 | 20 |
| danburite | 0 | 30 |
| cordierite | 0 | 20 |
| willemite | 0 | 20 |
| silicon dioxide | 25 | 65 |
| diboron trioxide | 0 | 10 |
| pekovite | 0 | 20 |
| maleevite | 0 | 25 |

4. The glass according to one of the preceding claims, wherein the proportion of silicon dioxide is at most 50 % by mol or at most 40 % by mol.

5. The glass according to at least one of the preceding claims, wherein the proportion of reedmergnerite in the glass is higher than the proportion of albite.

6. The glass according to at least one of the preceding claims, wherein the proportion of diboron trioxide is at most 15 % by mol, at most 10 % by mol or at most 7 % by mol.

7. The glass according to at least one of the preceding claims with a number of freedom degrees of angles according to formula (3)

$$f = \frac{\sum_{i=1}^{n} c_i \cdot z_i \cdot f_i}{\sum_{i=1}^{n} c_i \cdot z_i}$$

of up to 0.244, in particularly lower than 0.23 or lower than 0.22, preferably lower than 0.21.

8. The glass according to at least one of the preceding claims having a thermal expansion calculated according to formula (5)

$$CTE = \left( \frac{51815 \left( \frac{kJ}{mol} \right)}{E_{pot}} - 27.205 \right) ppm/K$$

of 3 ppm/K to 7 ppm/K, in particularly 4.5 ppm/K to 5.5 ppm/K.

9. The glass according to at least one of the preceding claims, wherein a dissolution of 50 $\mu$mol of glass in neutral water results in a pH value of <8.99, in particularly <8.79.

10. The glass according to at least one of the preceding claims, wherein the proportion of reedmergnerite in the glass is higher than the proportion of potassium reedmergnerite.

11. The glass according to at least one of the preceding claims, wherein the glass according to formula (2)

$$r = c \cdot (6.8 + (1 + f)^8)$$

has a removal rate of at most 135 mg/(dm$^2$3h), in particularly at most 125 mg/(dm$^2$3h).

12. The glass according to at least one of the preceding claims, wherein the total content of boron in the surface glass is at least 60 %, in particularly at least 80 % of the boron content in the bulk glass and/or wherein the boron content in the surface glass in relation to the bulk glass is reduced in an amount of at least 0.1 % by mol, in particularly at least 0.5 % by mol or at least 1 % by mol, wherein the surface glass is present in a depth of about 6 nm.

13. A method for the production of a glass according to at least one of the preceding claims, comprising the steps of

- melting the raw materials of the glass,
- optionally forming a glass article, in particularly a glass tube from the glass melt
- cooling the glass.

14. The method according to claim 13, comprising the additional step of

- exposing the glass to a gas containing water vapor during the forming and/or the melting.

15. A use of a glass according to one of claims 1 to 12 for containers and packages, in particularly for pharmaceutical packaging means.

**Revendications**

1. Verre dont la composition est **caractérisée par** les phases constitutives suivantes du verre :

| Phase constitutive | Min (% molaire) | Max (% molaire) |
|---|---|---|
| Reedmergnerite | 10 | 80 |
| Albite | 1 | 40 |
| Potassium-Reedmergnerite | 0 | 60 |
| Danburite | 0 | 30 |
| Cordiérite | 0 | 20 |
| Willemite | 0 | 20 |
| Dioxyde de silicium | 0 | 65 |
| Trioxyde de dibore | 0 | 20 |
| Pekovite | 0 | 20 |
| Maleevite | 0 | 25 |

le pourcentage d'autres ingrédients dans verre étant de 5 % maximum,
le nombre de degrés de liberté angulaire pour chaque atome en vrac selon la formule (3)

$$f = \frac{\sum_{i=1}^n c_i \cdot z_i \cdot f_i}{\sum_{i=1}^n c_i \cdot z_i}$$

étant inférieur à 0,25 et le verre ayant une profondeur moyenne de puits de potentiel, calculé selon la formule (4)

$$\overline{E_{pot}} = \frac{\sum_{i=1}^n c_i \cdot \sum_{j=1}^m z_{i,j} \cdot E_{pot,j}}{\sum_{i=1}^n c_i \cdot \sum_{j=1}^m z_{i,j}},$$

de 1515 kJ/mol à 1634 kJ/mol.

2. Verre selon la revendication 1 dont la composition de verres de base est **caractérisée par** les phases constitutives suivantes du verre, la somme des pourcentages de Reedmergnerite, de Potassium-Reedmergnerite et d'Albite étant d'au moins 50 % molaire :

| Phase constitutive | Min (% molaire) | Max (% molaire) |
|---|---|---|
| Reedmergnerite | 20 | 50 |
| Albite | 15 | 40 |
| Potassium-Reedmergnerite | 0 | 20 |
| Danburite | 0 | 15 |
| Cordiérite | 0 | 15 |
| Willemite | 0 | 15 |
| Dioxyde de silicium | 25 | 50 |
| Trioxyde de dibore | 1 | 10 |
| Pekovite | 0 | 10 |
| Maleevite | 0 | 10 |

3. Verre selon la revendication 1 dont la composition des verres de base est **caractérisé par** les phases constitutives suivantes du verre :

| Phase constitutive | Min (% molaire) | Max (% molaire) |
|---|---|---|
| Reedmergnerite | 9 | 50 |
| Albite | 1 | 15 |
| Potassium-Reedmergnerite | 0 | 20 |
| Danburite | 0 | 30 |

| Cordiérite | 0 | 20 |
|---|---|---|
| Willemite | 0 | 20 |
| Dioxyde de silicium | 25 | 65 |
| Trioxyde de dibore | 0 | 10 |
| Pekovite | 0 | 20 |
| Maleevite | 0 | 25 |

**4.** Verre selon l'une des revendications précédentes, dans lequel le pourcentage de dioxyde de silicium étant de 50 % molaire maximum ou 40 % molaire maximum.

**5.** Verre selon l'une au moins des revendications précédentes, le pourcentage de Reedmergnerite dans le verre est supérieur au pourcentage d'Albite.

**6.** Verre selon l'une au moins des revendications précédentes, dans lequel le pourcentage de trioxyde de dibore est de 15 % molaire maximum, 10 % molaire maximum ou 7 % molaire maximum.

**7.** Verre selon l'une au moins des revendications précédentes, le nombre de degrés de liberté angulaire selon la formule (3)

$$f = \frac{\sum_{i=1}^{n} c_i \cdot z_i \cdot f_i}{\sum_{i=1}^{n} c_i \cdot z_i}$$

allant jusqu'à 0,244, notamment étant inférieur à 0,23 ou inférieur à 0,22, de préférence inférieur à 0,21.

**8.** Verre selon l'une au moins des revendications précédentes, la dilatation thermique calculée selon la formule (5)

$$CTE = \left( \frac{51815 \left( \frac{kJ}{Mol} \right)}{\overline{E_{pot}}} - 27,205 \right) ppm/K$$

allant de 3 ppm/K à 7 ppm/K, notamment de 4,5 ppm/K à 5,5 ppm/K.

**9.** Verre selon l'une au moins des revendications précédentes, dans lequel le pH est <8,99, notamment <8,79, pour une dissolution de 50 $\mu$mol de verre dans de l'eau neutre.

**10.** Verre selon l'une au moins des revendications précédentes, dans lequel le pourcentage de Reedmergnerite dans le verre est supérieure au pourcentage de Potassium-Reedmergnerite.

**11.** Verre selon l'une au moins des revendications précédentes, dans lequel le verre a un taux d'élimination de 135 mg/(dm²3h) maximum, en particulier de 125 mg/(dm²3h) maximum, selon la formule (2)

$$r = c \cdot (6,8 + (1+f)^8).$$

12. Verre selon l'une au moins des revendications précédentes, dans lequel la teneur totale en bore dans le verre de surface correspond à au moins 60 %, en particulier au moins 80 %, de la teneur en bore dans le verre en vrac et/ou dans lequel la teneur en bore dans le verre de surface est réduit d'au moins 0,1 % molaire, en particulier au moins 0,5 % molaire ou au moins 1 % molaire par rapport au verre en vrac, le verre de surface étant présent à une profondeur de 6 nm environ.

13. Procédé de fabrication d'un verre selon l'une au moins des revendications précédentes, le procédé comprenant les étapes:

   - faire fondre les matières premières du verre,
   - mettre éventuellement en forme un article en verre, notamment un tube en verre, à partir du verre fondu,
   - refroidir le verre.

14. Procédé selon la revendication 13, comprenant l'étape supplémentaire suivante :

   - soumettre le verre à un gaz contenant de la vapeur d'eau lors de la mise en forme et/ou de la fusion.

15. Utilisation d'un verre selon l'une des revendications 1 à 12 pour des récipients et emballages, notamment pour des emballages pharmaceutiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014119594 A1
- EP 0699636 A
- DE 102014101756 B4


**In der Beschreibung aufgeführte Nicht-Patentliteratur**

- **SUSANNE FAGERLUND ; PAUL EK ; MIKKO HUPA ; LEENA HUPA.** On determining chemical durability of glasses. *Glass Technol.: Eur. J. Glass Sci. Technol. A,* Dezember 2010, vol. 51 (6), 235-240
- **ROLAND BENEDIX.** Bauchemie für das Bachelorstudium. Springer Vieweg, 2014, 129
- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- *Pure Appl. Chem.,* 1969, vol. 20 (2), 133-236
- **DAVID W. HENDRICKS.** Water Treatment Unit Processes: Physical and Chemical. CRC Taylor and Francis, 2006, 307
- **ARTUR KREZEL ; WOLFGANG MARET.** *The biological inorganic chemistry of zinc ions, Archives of Bio-chemistry and Biophysics,* 2016, 1-17
- Wie bei Bariumhydroxid. *Pure Appl. Chem.,* 1969, vol. 20 (2), 133-236
- **R. BRÜNING.** On the glass transition in vitreous silica by differential thermal analysis measurements. *Journal of Non-Crystalline Solids,* 2003, vol. 330, 13-22
- **ALBERTO GARCIA ; MARVON COHEN.** First Principles Ionicity Scales. *Phys. Rev. B,* 1993
- Einführung in die Materialwissenschaft I. **H. FÖLL.** Skript zur Vorlesung. Christian Albrechts- Universität Kiel, 79-83
- *American Mineralogist,* 1965, vol. 50, 1827-1850
- *American Mineralogist,* 1996, vol. 81, 1344-1349
- Immiscibility in silicate melts. **J.W. GREIG.** Am. J. Sci. 1927, vol. 13, 1-44, 133-154
- *Mineralogical Magazine,* 1993, vol. 57, 157-164
- *American Mineralogist,* 1974, vol. 59, 79-85
- *American Mineralogist,* 1992, vol. 77, 407-411
- *The Canadian Mineralogist,* 2004, vol. 42, 107-119
- **J.E. SHELBY.** Introduction into Glass Science and Technology. Royal Society of Chemistry, 2005, 93
- **C. PENTZEL ; D. HÖHNE.** *Chemische Aspekte bei Verdampfungsvorgängen aus Borosilicatglassschmelzen,* 1991, 327-329
- *Journal of The American Ceramic Society,* 1947, vol. 30 (9), 277-281
- **THEORIE VON A. DIETZEL.** Die Kationenfeldstärken und ihre Beziehungen zu Entglasungsvorgängen, zur Verbindungsbildung und zu den Schmelzpunkten von Silicaten. *Berichte der Bunsengesellschaft für physikalische Chemie,* 1942, vol. 48 (1), 9-23
- **R. SHANNON.** Revised Effective Ionic Radii and Systematic Studies of Interatomic Distances in Halides and Chalcogenides. *Acta Cryst.,* 1976, vol. A32, 751-767